(19)

Europäisches
Patentamt
European
Patent Office
Office européen
des brevets

(11) **EP 3 418 916 A1**

(12) **EUROPEAN PATENT APPLICATION**

(43) Date of publication:
**26.12.2018 Bulletin 2018/52**

(51) Int Cl.:
**G06F 17/30** (2006.01)    **G06Q 10/04** (2012.01)
**G06Q 30/02** (2012.01)

(21) Application number: **18178647.6**

(22) Date of filing: **19.06.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.06.2017   US 201762522325 P**

(71) Applicant: **Northeastern University
Boston, MA 02115 (US)**

(72) Inventors:
  • **Yucesoy, Burcu
    Brookline, Massachusetts 02445 (US)**
  • **Wang, Xindi
    Malden, Massachusetts 02148 (US)**
  • **Barabasi, Albert-Laszlo
    Brookline, Massachusetts 02445 (US)**
  • **Varol, Onur
    Cambridge, Massachusetts 02138 (US)**
  • **Ruppert, Peter
    Chestnut Hill, Massachusetts 02467 (US)**
  • **Eliassi-Rad, Tina
    Boston, Massachusetts 02116 (US)**

(74) Representative: **Reedy, Orlaith
    PurdyLucey
    Intellectual Property Limited
    6-7 Harcourt Terrace
    Dublin D02P210 (IE)**

(54) **METHOD AND APPARATUS FOR DETERMINING PEAK SALE AND ONE YEAR SALE PREDICTION FOR HARDCOVER FIRST RELEASES**

(57)    Systems and methods are disclosed for predicting a product's (*e.g.,* a book's) performance prior to its availability. An example embodiment is a system for machine learning classification that includes representations of characteristics of products, a pre-processor, and a machine learning classifier. The pre-processor can determine (i) representations of comparative intrinsic characteristics of the products based on the representations of characteristics of products and (ii) representations of corresponding comparative extrinsic characteristics of the products. The pre-processor can generate a data structure representing relationships between the comparative intrinsic characteristics and the comparative extrinsic characteristics. The machine learning classifier is trained with the data structure. The classifier can return representations of comparative extrinsic characteristics in response to given comparative intrinsic characteristics. A disambiguator can rank a plurality of intervals between the extrinsic characteristics for a plurality of other products and determine an extrinsic characteristic for the given product based on the ranking.

Fig. 6

**Description**

RELATED APPLICATIONS

This application claims the benefit of U.S. Provisional Application No. 62/522,325, filed on June 20, 2017, and U.S. Provisional Application No. 62/685,612, filed on June 15, 2018. The entire teachings of the above applications are incorporated herein by reference.

GOVERNMENT SUPPORT

This invention was made with government support under Grant No. FA9550-15-1-0077 from the Air Force of Scientific Research. The government has certain rights in the invention.

BACKGROUND

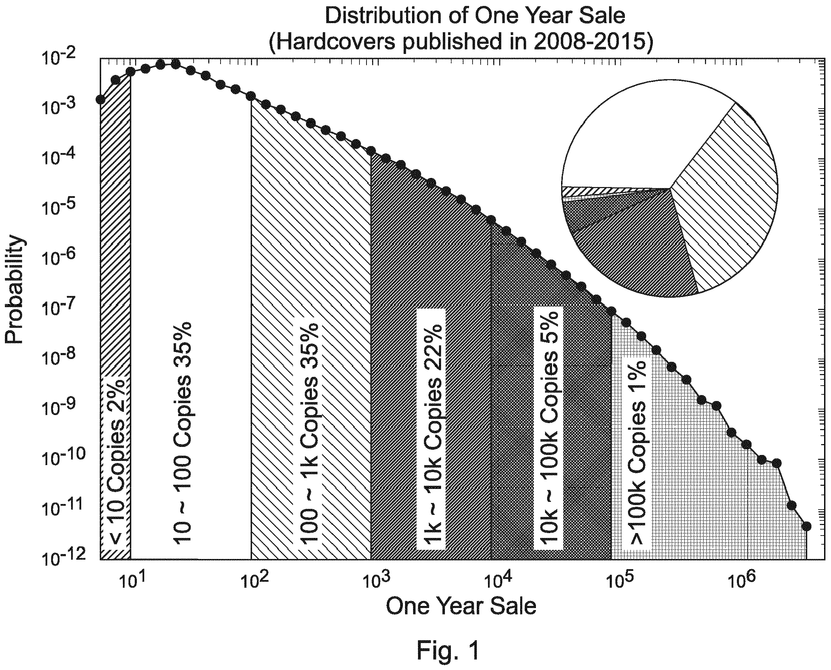

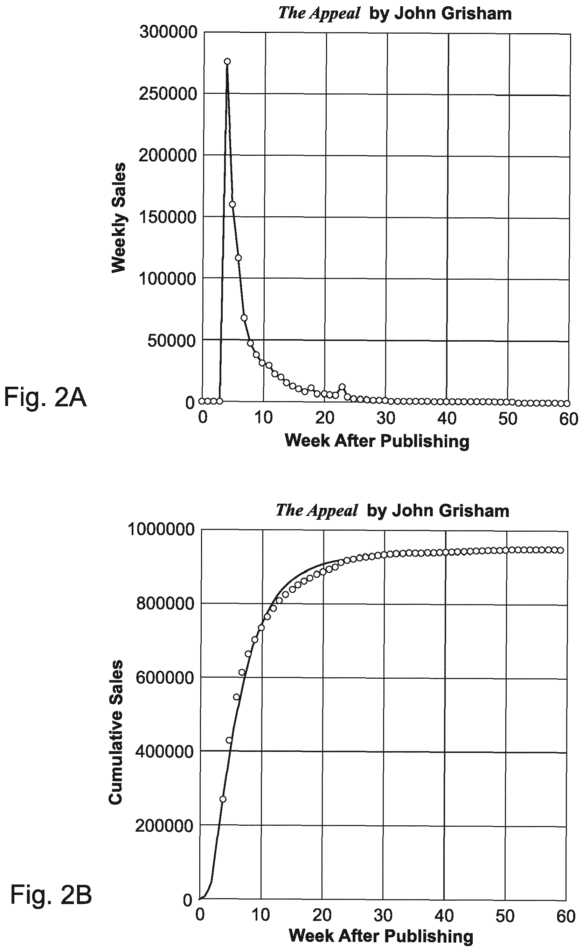

The publishing industry is highly competitive. FIG. 1 is a graph illustrating probabilities of sales for hardcover books published between 2008 and 2015. It has been found that book sales patterns follows a "quick rise, slower decay" pattern in general, with some variations occasionally. For example, FIG. 2A is a graph illustrating the weekly sales of the bestselling hardcover book The Appeal by John Grisham. After one year (52 weeks), the weekly sale drops to about zero. FIG. 2B is a graph illustrating the cumulative sale (dot) and prediction of cumulative sales (line) from the model of the bestselling hardcover book The Appeal by John Grisham. A statistical model can help to model this pattern:

$$s_i^t = m\left[e^{\lambda_i \Phi\left(\frac{\ln t - \mu_i}{\sigma_i}\right)} - 1\right]$$

where $\Phi(\mathrm{x}) = (2\pi)^{-1/2} \int_{-\infty}^{x} e^{-v^2/2} dy,$ $\lambda_i$ is the fitness, $\mu_i$ is the immediacy, determined when the sale reaches its peak, and $\sigma_i$ is the decay rate.

Using this model, the entire sales curve can be obtained given the first few weeks of data. However, for an accurate prediction, at least 25 weeks of data is needed, which usually includes the peak sales week. Peak sales is strongly correlated with the total sales for a book. If peak sales could be predicted using external features, then feeding it to the statistical model can help obtain the entire sales curve.

SUMMARY

A limitation with the above statistical approach is that within 25 weeks after publication, most books already have reached their sales peak and the height of this peak is a good indication of whether this book is going to sell well or not. If only the first few weeks of data before the sales peak is used, however, the estimation is not accurate. Therefore, predictions derived from the statistical model are not suitable for the fast-changing nature of the publishing industry. The systems and methods disclosed herein can predict a book's performance prior to its publication.

One example embodiment is a system for machine learning classification, as set out in the appended claims. The system includes representations of characteristics of products, a pre-processor, and a machine learning classifier. The pre-processor is configured to determine (i) representations of comparative intrinsic characteristics of the products based on the representations of characteristics of products and (ii) representations of corresponding comparative extrinsic characteristics of the products. The pre-processor is also configured to generate a data structure representing relationships between the comparative intrinsic characteristics and the comparative extrinsic characteristics. The machine learning classifier is trained with the data structure. The classifier is configured to return representations of comparative extrinsic characteristics in response to comparative intrinsic characteristics. The pre-processor can be configured to filter the representations of characteristics of products before determining the representations of comparative intrinsic characteristics of the products and generating the data structure.

Another example embodiment is a method of machine learning classification, as set out in the appended claims. The method includes determining representations of comparative intrinsic characteristics of products based on representations of characteristics of the products, determining representations of corresponding comparative extrinsic characteristics of the products, generating a data structure representing relationships between the comparative intrinsic characteristics and the comparative extrinsic characteristics, and training a machine learning classifier with the data structure to return representations of comparative extrinsic characteristics in response to given comparative intrinsic characteristics.

In many embodiments, the products are books. In such embodiments, the characteristics of the products can be any of: fame of an author of the book, previous cumulative sales for the author, genre and/or topic of the book, publisher value for the book, and seasonal fluctuations. The representations of characteristics of the books can be filtered to filter-out books that do not fit in a general market. The comparative intrinsic characteristics of the products can be differences between a type of characteristic between two books, or differences between multiple types of characteristics between two books.

Another example embodiment is a system for machine learning classification. The system includes a machine learning classifier and a disambiguator. The machine learning classifier is trained with data representing relationships between intrinsic characteristics of products and extrinsic characteristics of the products, and is configured to return a plurality of representations of comparative extrinsic characteristics for a given product in response to a plurality of comparative intrinsic characteristics between the given product and a plurality of other products. The disambiguator is configured to, based on the plurality of representations of comparative extrinsic characteristics for the given product, rank a plurality of intervals between the extrinsic characteristics for the plurality of other products and determine an extrinsic characteristic for the given product based on the ranking. The disambiguator can be configured to rank the plurality of intervals based on a tally of the intervals, where an interval is tallied when it is in a range of a given comparative extrinsic characteristic for the given product when compared to a given other product.

Another example embodiment is a method of machine learning classification. The method includes inputting, to a machine learning classifier trained with data representing relationships between intrinsic characteristics of products and extrinsic characteristics of the products, a plurality of representations of comparative intrinsic characteristics between a given product and a plurality of other products to obtain a plurality of representations of comparative extrinsic characteristics for the given product. The method further includes ranking a plurality of intervals between the extrinsic characteristics for the plurality of other products based on the plurality of representations of comparative extrinsic characteristics for the given product, and determining an extrinsic characteristic for the given product based on the ranking.

In many embodiments, the given product may be an unpublished book and the other products may be published books. In such embodiments, the determined extrinsic characteristic for the given product can be a peak sales or cumulative sales value.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1 is a graph illustrating probabilities of sales for hardcover books published between 2008 and 2015.

FIGS. 2A and 2B are graphs illustrating weekly sales, cumulative sale, and prediction of cumulative sales of a hardcover book.

FIG. 3 is a block diagram illustrating a modeling processes, according to an example embodiment.

FIG. 4 is a block diagram illustrating a system for machine learning classification, according to an example embodiment.

FIG. 5A is a block diagram illustrating a system for machine learning classification, according to an example embodiment.

FIG. 5B is a block diagram illustrating a system for machine learning classification of book sales, according to an example embodiment.

FIG. 6 is a flow diagram illustrating a method of machine learning classification, according to an example embodiment.

FIG. 7 is a flow diagram illustrating a method of machine learning classification, according to an example embodiment.

FIGS. 8A and 8B illustrate imprints with highest one-year sale median and imprints with highest number of books. Stars show the median of the top 160 selling books under the imprints.

FIG. 9 illustrates seasonal fluctuations for book sales, including medians of the one-year sale of top selling books that published in the same month from 2008 to 2016.

FIG. 10 illustrates clustering genres for fiction and nonfiction books. Results were generated with a K-means algorithm with a number of clusters k = 5 for both fiction and nonfiction. Detailed grouping information is shown in Table I.

FIGS. 11A and 11B illustrate deal size vs. actual one-year sales.

FIG. 12 illustrates a modeling result of peak sales for mystery/detective and biography/autobiography books.

FIG. 13 illustrates a modeling result of one-year sales for mystery/detective and biography/autobiography books.

FIGS. 14A-D illustrate peak sales for fiction and nonfiction books using linear regression and learn to place approaches.

FIGS. 15A-D illustrate confusion matrices for one-year sales for fiction and nonfiction books.

FIGS. 16A and 16B illustrate ROC graphs for one-year sales for fiction and nonfiction books.

FIG. 17 illustrates feature importance of fiction and nonfiction books.

FIGS. 18A and 18B illustrate normalized accuracy scores of feature groups for different book genres.

FIG. 19 illustrates ternary scatter plots of normalized absolute error for feature group importance for different book genres.

FIG. 20 is a schematic view of a computer network environment in which the example embodiments presented herein may be implemented.

FIG. 21 is a block diagram illustrating an example computer node of the network of FIG. 20.

## DETAILED DESCRIPTION

A description of example embodiments follows.

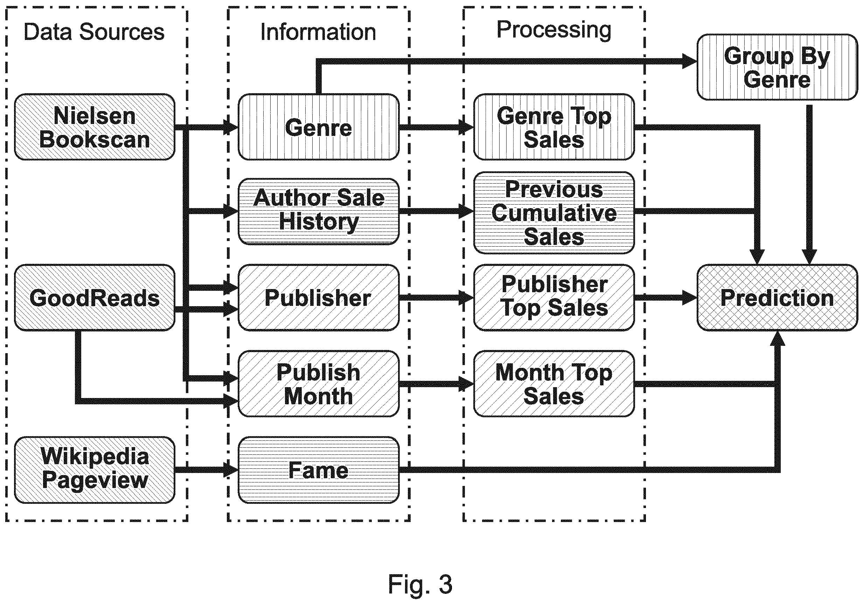

Described herein are systems and methods that can use important factors in product (*e.g.,* book) purchase patterns, order them with respect to their importance for various book genres, and predict both the sales at their peak week and the total sales in the first year after publication of individual books before their market launch. By using the weekly and peak sales information of thousands of print books published in the United States, along with information about the genre they are written in, the fame/visibility and publishing history of their authors, the past success statistics of the imprints that publish these books, and the seasonality of the book industry in general, methodologies have been developed, as disclosed herein, to predict the number of copies a book will sell at its peak point after publishing and how many additional copies it will continue to sell during its first year. Moreover, these contributing factors can be ranked in terms of significance and offer ways to increase sales by manipulating those that can be altered. FIG. 3 is a block diagram illustrating an example of such a modeling process.

The findings were tested and validated from an unprecedented complete data set of more than 170,000 hardcovers published in the United States since 2008. By using both complex machine learning techniques, such as a neural networks, and more explanatory methods such as linear regressions, both accurate predictions and human-readable conclusions can be obtained.

The disclosed systems and methods can integrate a variety of data sources, including, for example, Bookscan (for sales information and meta-data), Goodreads (additional information about books and authors), and Wikipedia Pageviews (author name recognition and fame). Machine learning and statistical data mining techniques can be used for sales prediction, which not only provides accurate prediction results, but also provides insights about what determines a book's commercial success. Because data is used not only from each book individually, but also from an extensive overview of the market in general in terms of properties and sales histories of over a hundred thousand books, combined with known sales drivers, such as an author's previous success and name recognition, a very accurate prediction can be made about how a book will sell months before the book is on the shelves.

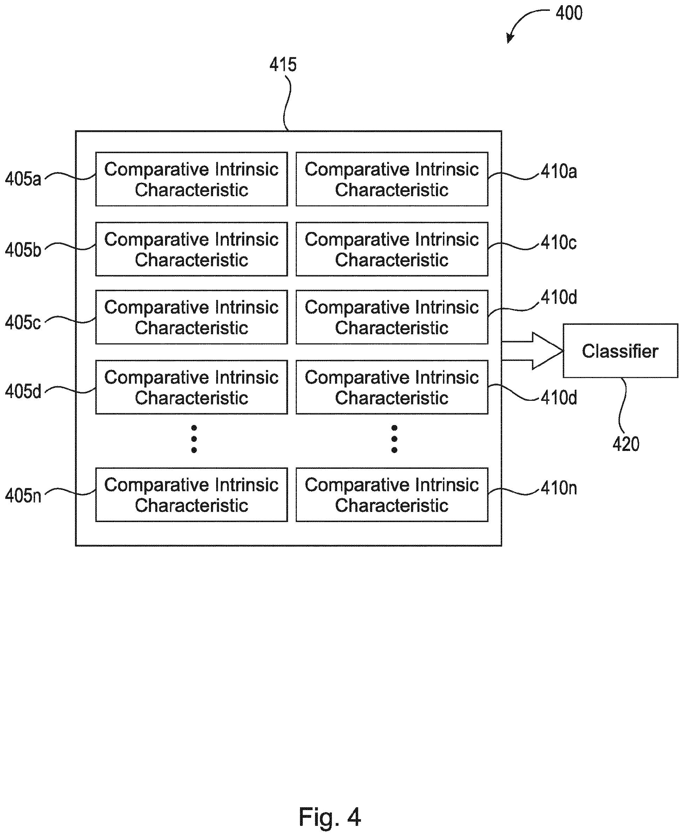

FIG. 4 is a block diagram illustrating a system 400 for machine learning classification, according to an example embodiment. A pre-processor is configured to determine representations 405a-n of comparative intrinsic characteristics of products based on representations of characteristics of products. The pre-processor is also configured to determine representations 410a-n of corresponding comparative extrinsic characteristics of the products. The pre-processor is also configured to generate a data structure 415 representing relationships between the comparative intrinsic characteristics and the comparative extrinsic characteristics. A machine learning classifier 420 is trained with the data structure 415. The classifier 420 is configured to return representations of comparative extrinsic characteristics in response to comparative intrinsic characteristics. In some embodiments, the pre-processor can be configured to filter the representations of characteristics of products before determining the representations 405a-n of comparative intrinsic characteristics of the products and generating the data structure 415. The classifier 420 can be a random forest classifier, for example, which includes a set of decision trees derived from a training set. Information from different decision trees can be aggregated to decide the final class of the subject of the input data. The random forest classifier can be trained using the data structure 415, which in the case of books, for example, can include information about aspects of many books. For example, a representation 405a of a comparative intrinsic characteristic between two books (Book 1 and Book 2) can be a difference between the previous cumulative sales of the author of Book 1 and the previous cumulative sales of the author of Book 2. The corresponding representation of a comparative extrinsic characteristic 410a can be information as to whether the peak sales of Book 1 was greater than the peak sales of Book 2.

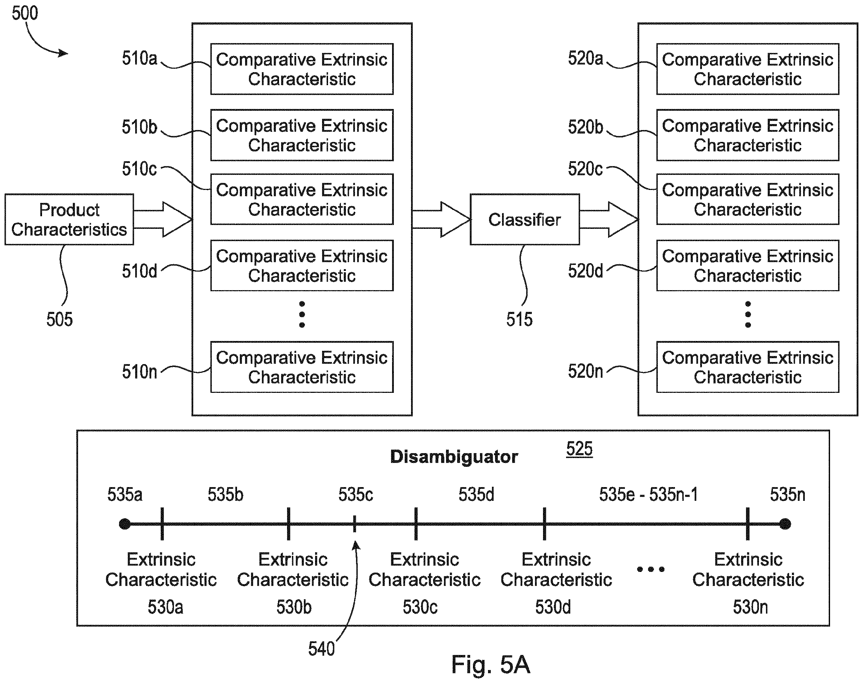

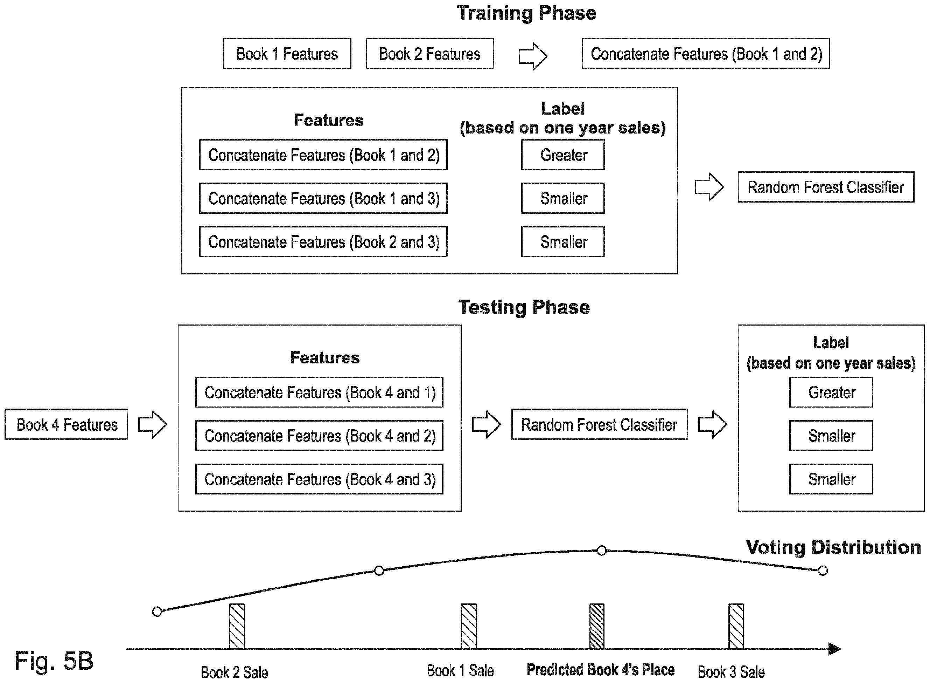

FIG. 5 is a block diagram illustrating a system 500 for machine learning classification, according to an example embodiment. The example system includes a machine learning classifier 515 and a disambiguator 525. The machine learning classifier 515 (which may be the classifier 420 described in FIG. 4) is trained with data representing relationships between intrinsic and extrinsic characteristics of products. The machine learning classifier 515 is configured to return a plurality of representations 520a-n of comparative extrinsic characteristics for a given product 505 in response to a plurality of comparative intrinsic characteristics 510a-n between the given product and a plurality of other products. The disambiguator 525 is configured to, based on the plurality of representations 520a-n of comparative extrinsic characteristics for the given product, rank a plurality of intervals 535a-n between the extrinsic characteristics for the plurality of other products. The disambiguator 525 is configured to determine an extrinsic characteristic 540 for the given product based on the ranking.

The disambiguator 525 can be configured to rank the plurality of intervals based on a tally of the intervals 535a-n, where an interval is tallied when it is in a range of a given comparative extrinsic characteristic for the given product when compared to a given other product. For example, if the extrinsic characteristic is whether one book has more peak sales than another book, then the intervals 535a-n can represent a ranking of books based on their peak sales 530a-n. When information for a given book is input into the classifier 515, the classifier 515 can return results 520a-n in the form of whether the given book is likely to have greater or lesser sales as compared to each of the other books. The intervals 535a-n may be tallied based on the results 520a-n from the classifier 515. For each of the results 520a-n, if the given book is predicted to have peak sales greater than a book corresponding to peak sales designated by 530b, then the tallies of intervals 535c through 535n can be increased by one. This tallying process can continue for all results 520a-n returned by the classifier 515. The interval with the highest tally can then be used to calculate (e.g., based on an interpolation) the peak sales 540 of the subject book. If more than one interval has the same number of highest tally values, then the peak sales 540 of the subject book can be calculated based on all highest tallied intervals.

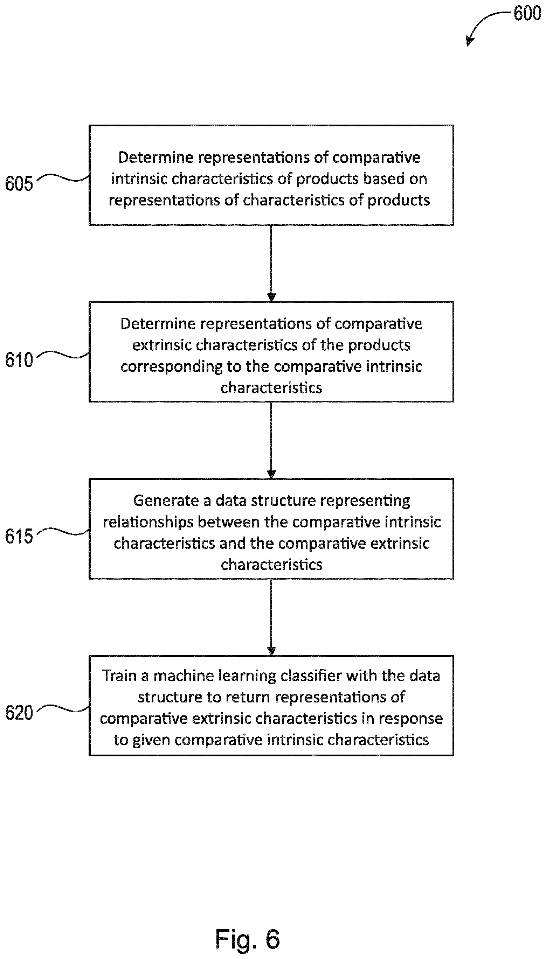

FIG. 6 is a flow diagram illustrating a method 600 of machine learning classification, according to an example embodiment. The example method 600 includes determining 605 representations of comparative intrinsic characteristics of products based on representations of characteristics of the products, determining 610 representations of corresponding comparative extrinsic characteristics of the products, generating 615 a data structure representing relationships between the comparative intrinsic characteristics and the comparative extrinsic characteristics, and training 620 a machine learning classifier with the data structure to return representations of comparative extrinsic characteristics in response to comparative intrinsic characteristic. In many embodiments, the products are books. In such embodiments, the characteristics of the products can be any of: cumulative fame of an author of the book, previous cumulative sales for the author, genre of the book, publisher value for the book, and seasonal fluctuations. The representations of characteristics of the books can be filtered to filter-out books that do not fit in a general market. The comparative intrinsic characteristics of the products can be differences between a type of characteristic between two books, or differences between multiple types of characteristics between two books.

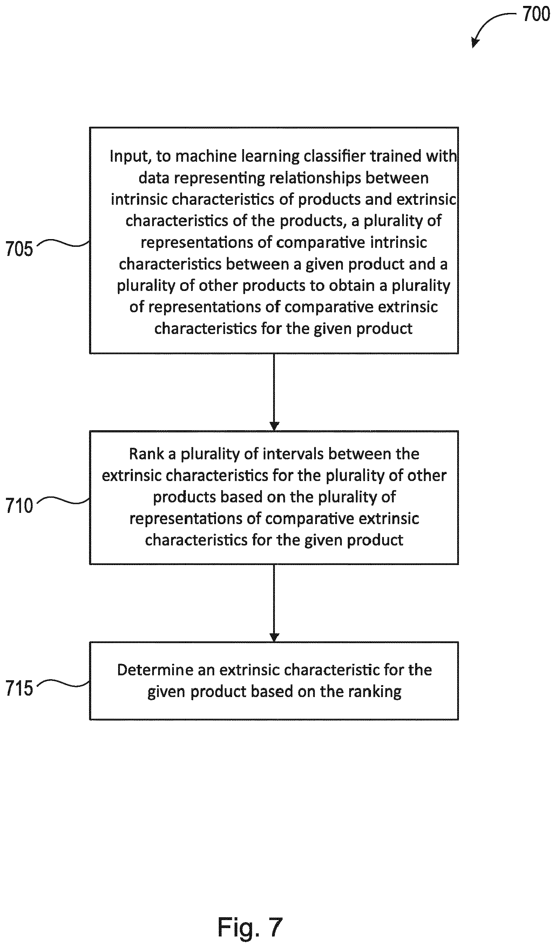

FIG. 7 is a flow diagram illustrating a method 700 of machine learning classification, according to an example embodiment. The example method 700 includes inputting 705, to a machine learning classifier trained with data representing relationships between intrinsic characteristics of products and extrinsic characteristics of the products, a plurality of representations of comparative intrinsic characteristics between a given product and a plurality of other products to obtain a plurality of representations of comparative extrinsic characteristics for the given product. The method 700 further includes ranking 710 a plurality of intervals between the extrinsic characteristics for the plurality of other products based on the plurality of representations of comparative extrinsic characteristics for the given product, and determining 715 an extrinsic characteristic for the given product based on the ranking. In many embodiments, the given product may be an unpublished book and the other products may be published books. In such embodiments, the determined extrinsic characteristic for the given product can be a predicted peak sales or cumulative sales value.

The following describes example implementations of the disclosed systems and methods.

I. PRELIMINARY KNOWLEDGE OF BOOK SALES PATTERNS

It has been found that (1) most bestselling books reach their sales peak in less than ten weeks after release, (2) sales tend to follow a universal pattern and can be described by a statistical model, and (3) the model can help predict future sales. Using this statistical model, the entire sales curve of a book can be predicted from only three parameters and can be accurately calculated using the weekly sales data during the first 25 weeks after publication. The limitation with the approach is that within 25 weeks after publication, most books already have reached their sales peak and the height of this peak is a good indication of whether this book is going to sell well or not. If only the first few weeks of data before the sales peak is used, however, the estimation is not accurate. Therefore, predictions derived from the statistical model are not suitable for the fast-changing nature of the publishing industry. The systems and methods disclosed herein, however, can predict a book's performance prior to its publication.

II. DATA

One example data source is from Nielsen/NPD Bookscan, a sales data provider for the book publishing industry. The database includes information for all print books in the United States since 2003, from the meta-data of each book (*e.g.,* the ISBN number, author name, title, category, BISAC number, publisher, price) to weekly sales of each book since its publication. The top selling 10,000 books of each month published between 2008 and 2015 can be obtained.

For simplicity, only hardcovers were considered for the studies presented herein, a total of 170,927 books, but the systems and methods disclosed herein can be applied to other types of books or products. All hardcovers were used when selecting and calculating the features, but to establish the model and to test its predictive power, only more recent hardcovers published in 2015 were considered, a total of 16,120 books.

Additionally, Wikipedia Pageviews data can be used to quantify the fame (visibility) of each author. Wikipedia Pageviews are an indication of the number of people who have visited a Wikipedia article during a given time period and are available since 2008. They were originally provided in the form of a large data dump, but since August 2016, Wikipedia provides an API for users to query pageviews more easily. Moreover, book descriptions can be obtained from Amazon and Goodreads data, which can be analyzed using Natural Language Processing techniques, offering information about a book's content that is not available from Bookscan.

To compare the results with existing predictions from the industry, Publisher Marketplace data can be used for prediction reference. Publisher Marketplace is a website that provides information of deals in the publishing industry. In general, when publishers decide to purchase a book, they estimate the sales of the book, and based on that estimate offer different size deals; the higher the estimate, the higher the deal. The deals are reported by book agents on the website, and may include information such as author, working title, publisher buying the book, deal date, deal type, and deal size. Sometimes after the book is published, the ISBN number is added as well. Publisher Marketplace categorizes deals into 5 categories: a nice deal ($1 - $49,000), a very nice deal ($50,000 - $99,000), a good deal ($100,000 - $250,000), a significant deal ($251,000 - $499,000), and a major deal ($500,000 and up). From the 85,078 deals on the site, 22,105 include the size-of-deal information, and 3,617 of those are hardcovers.

III. MODEL

A. Features

When choosing a book, a reader is affected by many aspects. Sometimes it is the author, sometimes it is the properties of the book itself, such as genre and topic, and sometimes it is how well a book is advertised. The example features presented herein are obtained from these three aspects. For the author, readers tend to choose famous authors or authors they have read and liked before. For the book itself, readers usually have specific genre preference. Additionally, well-advertised books with more presences are more likely to attract readers.

Some of these factors are easily quantified. For authors, fame/visibility can be represented by the Wikipedia Pageviews, *i.e.,* how many people click on author's page over time. Also, readers tend to buy books from authors they have read before; therefore, authors with higher previous sales are more likely to attract readers for a new book. The genre information is given by the BISAC code as explained below. For advertising it is more difficult to find a direct measure. However, advertising is usually the publishers' responsibility, and some publishers have more resources in marketing than others; therefore, publisher information can be used to quantify the extent of book advertisement. Finally, it is known that book sales have seasonal fluctuations, which can be taken into consideration as well. Features used can include cumulative fame of the author, previous cumulative sales of the author, genre information, publisher value for the book, and seasonal fluctuations. The calculation of these features can involve various data sources.

1. Author Features

Author Visibility/Fame: Wikipedia Pageviews can be used as a proxy of the general public interest into an author, *i.e.* his or her fame. There are many aspects of visibility: cumulative visibility, representing all visits starting from the page creation date is relevant for some authors, while recent visibility is more relevant for others. In order to capture different aspects of visibility, the following author parameters for each book can be used, representing the visibility feature group:

- Cumulative visibility, $F^{tot}$, counts the total pageviews of an author up until the book's publication date.
- Longevity, $t^F$, counts the days since the first appearance of an author's Wikipedia page until the book's publication date.

$$f^{\text{tot}} = \frac{F^{tot}}{t^F}.$$

- Normalized cumulative visibility, $f^{tot}$, normalizes the cumulative visibility based on its longevity, *i.e.,*
- Recent visibility, $F^{rec}$, counts the total pageviews for an author during the month before the book's publication. This captures the momentary popularity of the author around the time of the publication.

Previous Sales: Bookscan weekly sales data can be used to calculate the previous sales of all books written by an author. Similar to an author's visibility, previous sales can be incorporated in various ways. For example, previous sales in different genres from the predicted book is relevant to authors who change genres during their career. Previous sales which belong to other genres may have less influence than previous sales in the same genre as the new book. Therefore, previous sales can be split into two parts: previous sales in this genre, and previous sales not in this genre. In summary, the following information for each book can be determined, representing the previous sales feature group:

- Total sales, $S^{tot}$, obtaining by querying an author's entire publishing history from Bookscan and summing up the sales of her previous books up until the publication date of the predicted book.

- Sales in this genre, $S^{tot}_{in}$, counts the author's previous sale in the same genre as the predicted book.

- Sales in other genres, $S^{tot}_{out}$, counts the author's previous sale in other genres.

- Career length, $t^p$, counts the number of days from the date the author's first book is published till the publishing date of the book for prediction.

- Normalized sales, $S^{tot}$, normalizes the total sales based on career length, *i.e.,* $s^{tot} = \dfrac{S^{tot}}{t^p}$.

2. Book Features

Genre information: Differences between genres are important. Fiction and nonfiction books have extremely different behaviors, and within fiction and nonfiction each sub-genre has its own behavior as well. Direct information about genres can be obtained from the BISAC code, which is a standard code used to categorize books based on topical content. There are 52 major sections in the BISAC code list, such as "COMPUTERS", "FICTION", and "HISTORY". Under each major section, there are a number of detailed descriptors that represent sub-topics, for example "FIC022000" under "FICTION" stands for "FICTION I Mystery & Detective I General". All of the subcategories may have different behaviors; however, analyzing each of them separately is not ideal. First, under each subcategory, there may be too few books to obtain a meaningful generalized model. Second, some genres show very similar behavior in terms of sales numbers. And finally, too many models would make it difficult to pinpoint important common patterns in the publishing industry. Therefore, clustering can be used to reduce the number of sub-genres needed for the model. First, a coarse-grained BISAC code can be obtained under these rules:

- If the first three letters are not "FIC", *i.e.* Fiction, use the first three letters to describe the genre.
- If the first three letters are "FIC", use the first six characters, for example, "FIC022", which stands for "FICTION I Mystery & Detective".

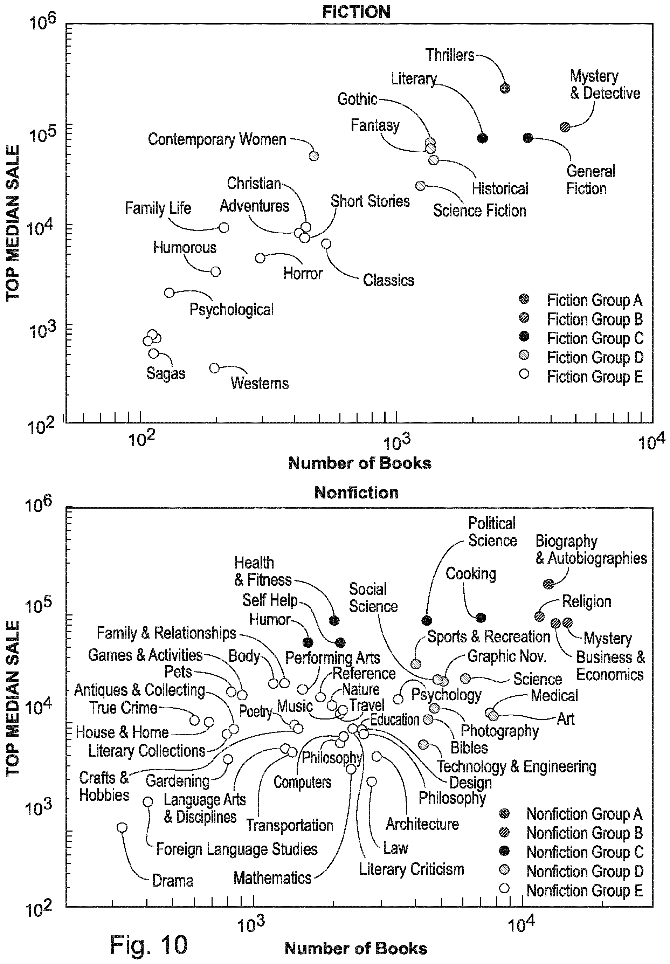

After this process, each sub-genre can be clustered based on both the number of books in them and the median sales of the top selling books in that genre. This can be done separately for fiction and nonfiction. The aim of the clustering is to aggregate genres having comparable size (*i.e.,* the number of books) and comparable potential (median sale of top selling books, *i.e.,* "the ceiling sales of this genre"). An algorithm that can be used for clustering is a K-means algorithm. Table I and FIG. 10 show the clustering result for fiction and nonfiction categories.

TABLE I: Clustering Result Table

|  | Fiction | Nonfiction |
|---|---|---|
| Group A | Thrillers | Biography/ Autobiography |
| Group B | Mystery & Detective | Religion, Business, Economics |
| Group C | General Fiction, Literary | Cooking, Political Science, Health & Fitness, Humor, Self-help |
| Group D | Contemporary, Women, Gothic, Historical, Science Fiction, Fantasy | Sports & Recreation, Science, Social Science, Comics & Graphical Novel, Photography, Bibles, Art, Medical, Technology & Engineering |
| Group E | Family Life, Crime, Christian, Horror, Adventures, *etc.* | Music, Pets, Body, Design, Performing arts, Reference, *etc.* |

The result of genre clustering is used to group books and establish the model. Within each grouping, the median sales of top 100 selling books can be used for each genre as a feature. For example, General Fiction and Literary are clustered to Fiction Group C. Some clusters are topically surprising; for example, Nonfiction Group B combines Religion, Business, and Economics; however, size and sales potential wise, these three genres are similar. The result of genre clustering can be used to group books and calculate features. Various statistics (including the mean, median, standard deviations, 10th, 25th, 75th and 90th percentile, same hereafter) of the book sales within each genre cluster can be used, forming a genre cluster feature group.

Topic Information: Genre information is assigned by publishers and can be different from how readers categorize books. For example, books under BISAC "BUS" (Business) can cover very different subjects, varying from finance to science of success. Therefore, topics from one-paragraph book summaries on Amazon or Goodreads can be extracted to get a better sense of the true content of the book. Non-negative Matrix Factorization (NMF) techniques from Natural Language Processing can be used.

The NMF outputs two matrices: a topic-keyword matrix and a book-topic matrix. The topic-keyword matrix enables creation of a topic-keyword bipartite graph showing the composition of each topic. For each topic, the book sales distribution and corresponding statistics for each distribution can be obtained. Then for each book, since it's represented as a linear combination of several topics, where the weights come from the book-topic matrix, the features can be calculated as a weighted average of each statistics of each topic.

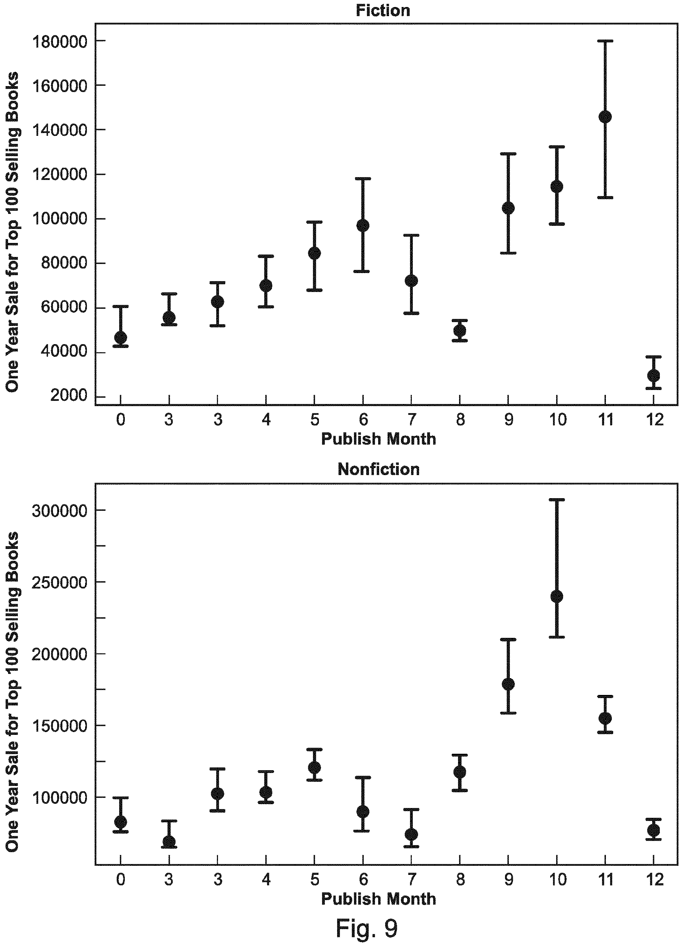

Publishing Month (Seasonal Fluctuations): Book sales are largely related to publishing month. In a previous analysis of New York Times Bestsellers, it was found that books needed to sell more copies if they want to be on the bestsellers list during the holiday season in December due to people buying more books for the holidays. Similar seasonal fluctuation in sales for all hardcovers were observed as well. Using the fiction and nonfiction hardcover books published between 2008 and 2015, books were aggregated by publishing month, shown in FIG. 9. From FIG. 9, it can be found that fiction books published in November and nonfiction published in October end up having higher sales within one year, and for both fiction and nonfiction, books published in December have lower sales. This seems to be at odds with the observation with New York Times Bestsellers; however, it should be noted that books published in October and November will have been out for about 4 to 8 weeks in December, and based on a preliminary knowledge on book sales patterns, 10 weeks is the average week for books to hit their peak. Also, from previous observations, fiction books usually reach their peak faster than nonfiction books, which could explain the lateness of the highest sales month for fiction books. Therefore, books published in October and November enjoy the holiday boost the most whereas books published in December will not have enough time to make their presence known. Based on this insight, the median of the top selling 100 books for each month can be used as an indication of seasonal fluctuations.

3. Publisher Features

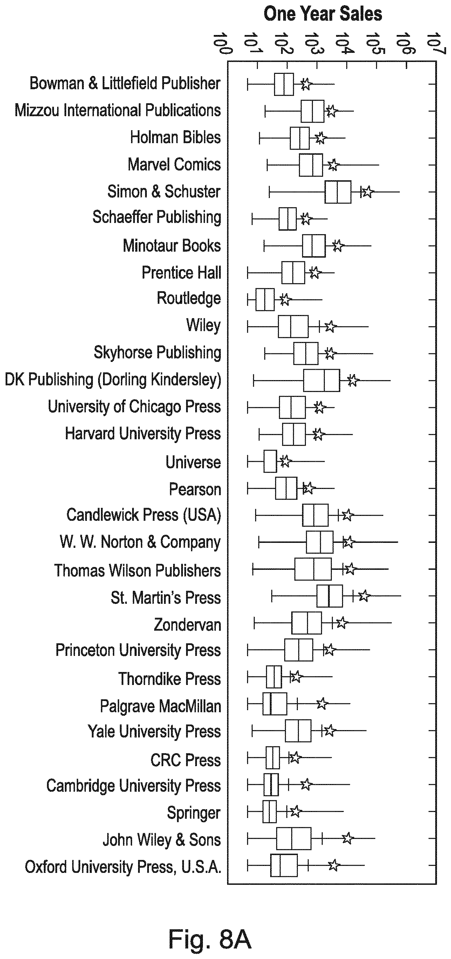

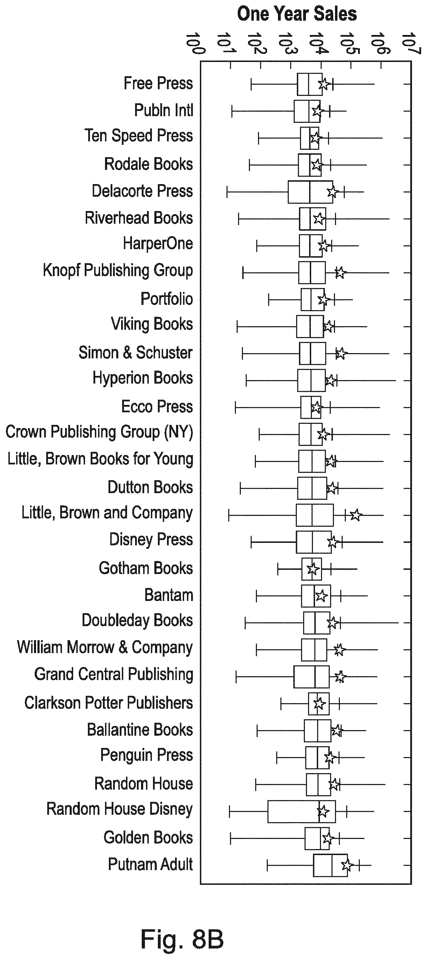

In Bookscan data, each book is recorded with a publisher and an imprint. In the publishing industry, a publisher usually has multiple imprints with their own different missions. Some imprints may be dedicated to one specific genre. For example, Portfolio under Penguin Random House only publishes business books. An imprint is independent from the publisher with regards to selecting books to publish and taking on the responsibility of advertising. Some imprints are more attractive to authors because they offer higher deals and have more resources when advertising the book. Additionally, in order to keep their reputation, such imprints with better reputations will likely be more selective. Therefore, books published by those imprints would be expected to sell more. To calculate the imprint value, the median sales of top 160 (20 books on average over an 8-year period) selling books under each imprint can use used. It was found that even with better imprints, some books sell badly. In FIGS. 8A and 8B it is observed that the variation within each imprint is extremely large. Therefore, using the median or mean sales for all books published under the imprints may be problematic. Hence, top selling books under imprints can be considered, which characterizes in general how high a book under this imprint could sell, or "the ceiling of this imprint," which is shown as stars in FIGS. 8A and 8B. To capture the prominence of an imprint, all books published by the imprint between 2008 and 2015 were considered for the studies presented herein. It was observed that the variation in sales within each imprint can span several orders of magnitudes. For example, for Random House, the highest selling book sold one million copies in a year, while the lowest selling book sold only around one hundred copies in the same period. An imprint feature group can be developed, where for each category (fiction and nonfiction), the book sales distribution of each imprint is obtained statistics are applied for each distribution in the features.

B. Filtering

Filtering can be conducted on the data before feeding it into the model, with the purpose of excluding special books that do not fit in the general market. The filtering criteria can be:

- Filter out books by imprints that published less than 160 books over an 8-year period (2008-2015). Books published by those small imprints are usually special editions which behave differently from the general market.
- Filter out books of a genre that has less than 100 books over the 8-year period (2008-2015). Books in those small genres are usually not very recognizable in the general market.

C. Model Establishment

1. First Example

After obtaining the individual features, Linear Regression models can be used to predict the peak sale (or one-year sales) for each book. From the model described above, it can be observed that all features are fat-tail distributed. Furthermore, it can be observed that the peak sales (or one-year sales) are also log-normal distributed. Therefore, a logarithm can be obtained on the dependent and independent variables, leading to the model as:

$$\log(\text{Peak Sale}) \sim a_1 \log(\text{Fame}) + a_2 \log(\text{Previous Sales}) + a_3 \log(\text{Imprint Value}) +$$
$$a_4 \log(\text{Month Value}) + a_5 \log(\text{Genre Value}) + \text{const} \qquad (1)$$

for each genre grouping (five for fiction grouping and five for nonfiction grouping).

a. Model Solving

An algorithm that can be use is Ridge Regression, which is a linear regression with L-2 regularization. Ridge Regression penalizes large estimates to reduce over-fitting and is also known to work well with a co-linear relationship between independent variables.

Classic linear regression could be written as finding parameter vector $\omega = (\omega_0, \omega_1, ..., \omega_p)$ for:

$$\hat{y} = \omega_0 + \omega_0 \chi_1 + \omega_0 \chi_2 + \ldots + \omega_p \chi_p \qquad (2)$$

that minimize the residual sum of squares between the observed value y in the dataset and the predicted value $\hat{y}$. More mathematically, the objective function is:

$$\min_{\omega} \|X\omega - y\|_2^2 \qquad (3)$$

For Ridge Regression, the objective function not only minimizes the residual sum between observed and predicted value, but also penalizes the size of the coefficient by using L-2 norm (Euclidean norm), leading up to objective function as:

$$\min_{\omega} \|X\omega - y\|_2^2 + \alpha \|\omega\|_2^2 \qquad (4)$$

where $\alpha \geq 0$ controls the amount of shrinkage: the larger the value of $\alpha$, the greater the shrinkage and the coefficient becomes more robust to co-linearity.

b. Model Testing

Various testing methods can be used for the model.

1. k-fold Cross Validation

Cross Validation method is a classic testing method in the machine learning field. The whole dataset is randomly partitioned into k equal size subsamples. Of the k subsamples, one sample is retained as the test data for the model and the remaining k-1 subsamples are used as training data. The whole process is repeated k times, with each subsample used only once as test data. Each time, a $R^2$ score is obtained for the test sample. The k $R^2$ from the folds can then be averaged to produce a single estimation. In the testing, k = 10 was used.

2. Predict on next year

Another test may be performed using books published in a previous year to establish the model to make predictions for books published in the next year. For example, the model can be built based on books published in 2015 and predict the sales for books published in 2016. The performance is again indicated by the $R^2$ score.

3. Using external reference data

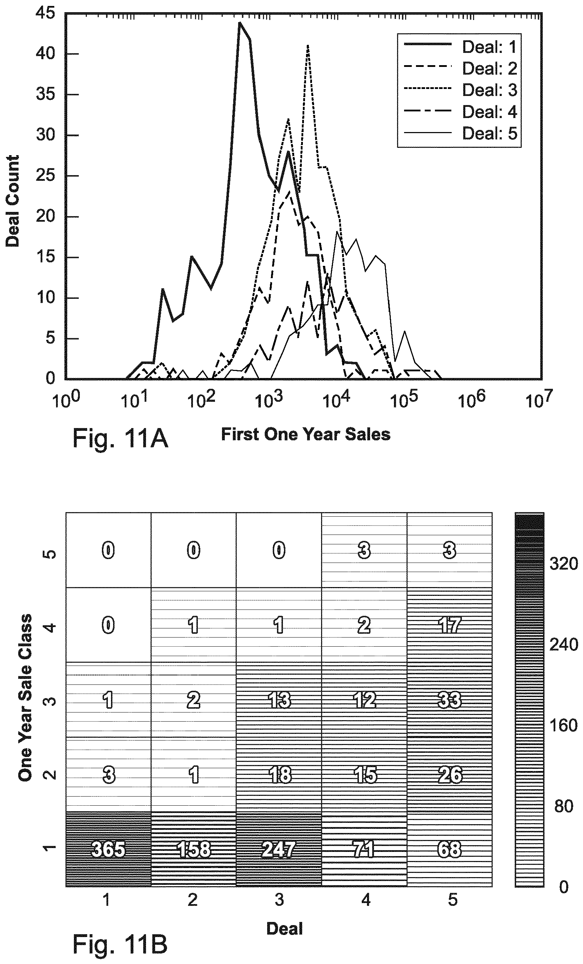

Predictions can be compared with existing predictions in the publishing industry. Publisher Marketplace provides deal information between imprints and books, and the deal size can be regarded as a prediction made by an imprint. The prediction can be compared with their deal size to see whether there are improvements with the model. A comparison of deal size and actual one-year sale of books is shown in FIGS. 11A and 11B. From both the distribution and the heatmap, it can be seen that predictions from publishers are not accurate and tend to be over-predicted. FIG. 11A shows a distribution of one-year sales for books with different deal sizes from Publisher Marketplace. If publishers' predictions are precise, it would be expected that the distribution for each deal size is narrow and ordered by deal size, but the distributions have much overlap. FIG. 11B shows a categorization of one-year sales into five categories - a heatmap of books with deal size i and one-year sales category j. If the publishers have precise predictions, it would be expected that there would be a higher density on the diagonal line, but the density is concentrated on the lowest row, indicating the over-predicting of publishers.

2. Second Example ("Learning to Place")

Book sales follow a heavy-tail distribution, leading to a class imbalance problem where there are far more low-selling books than high-selling books. This imbalance can cause methods like Linear Regression to under predict on the high-selling books, which are, however, the most important books for publishers. In order to address this imbalance problem, the Learning to Place approach addresses the following question: Given a sequence of previously published books ranked by their sales, where would a new book be placed in this sequence?

The example Learning to Place approach includes two stages: 1) Establish a pairwise relationship classifier, which predicts whether a new book will sell better or worse than each book in the training set; and 2) Assign a place to the predicted book based on the pairwise relationships, *i.e.,* find the best place for it in the previously given book sequence ranked by sales. The process is graphically explained in the flowchart of FIG. 5B. Note that going from the pairwise relationship to a ranking is not trivial. The pairwise relationship may have conflicting predictions, for example it may indicate that A is better than B, B is better than C, and C is better than A. A majority vote technique in the second stage resolves such conflicts.

The Learning to Place approach works as follows:

Training Phase: For each book pair, i and j with feature vectors $f_i$ and $f_j$, the two feature vectors $X_{ij} = [f_i, f_j]$ can be concatenated. If book i's sales number is greater than book j's, then $y_{ij} = 1$; if i's sales number is smaller than j's, then $y_{ij} = -1$ (ties can be ignored in the training phase). Formally, denoting with $s_i$, the sales of book I, and B, the set of books in the training set, the training data is:

$$X_{ij} = [f_i, f_j], \text{ for each}(i,j) \in B \times B, i \neq j,$$

$$y_{ij} = \begin{cases} 1, & s_i > s_j \\ -1, & s_i < s_j \end{cases}. \tag{5}$$

By defining the training data, the problem is converted into a classification problem, in which 1 or -1 is predicted for each book pair. This training data is then sent to a classification algorithm (classifier) F to fit the y label and obtain the weights on each feature in matrix X. A Random Forest classifier can be used for this phase.

Testing Phase:

1) Pairwise relationship prediction: For each new (test) book k, obtain

$$X_{kj} = [f_k, f_j], \text{ for each } i \in B. \qquad (6)$$

Then apply the classifier on the testing data to get the predicted pairwise relationship between the predicted book and all other books in the training data.

$$\hat{y}_{ki} = F(X_{ki}). \qquad (7)$$

2) Assign the place of the predicted instance: After obtaining the pairwise relationships, treat each book in the training data as a "voter." Books (voters) from the training data can be sorted by sales, for example, dividing the sales axis into intervals. If $\hat{y}_{ki} = 1$, *i.e.,* book k should sell more than book i, sales intervals on the right of $s_i$ obtains a "vote." If $\hat{y}_{ki} = -1$, book i "votes" for intervals on the left of $s_i$. After the voting process, obtain a voting distribution for each test book and take the interval with the most "votes" as the predicted sales interval for book k.

Model Testing: To test the model, k-fold Cross Validation can be used, a known testing method in machine learning. An evaluation score can be obtained for each fold of the test sample. Example testing that was performed used k = 5. The evaluation scores used were:

- R2 Score: The mid-point of the sales interval was used as a representation of the predicted sales and compared with the true sales number.
- Confusion Matrix: The bin of predicted sales interval was determined and compared with the bin of the actual sales through vertical log binning. This method results in a confusion matrix.
- AUC and ROC: Evaluate the ranking obtained directly with the true ranking.
- High-end RMSE: RMSE (Root-Mean-Square Error) was calculated for high-selling books to measure the accuracy of the sales prediction for high selling books.

IV. RESULTS

A. For the First Example

Books written by first time authors and those written by experienced authors were separated. This separation was based on the fact that, for books written by first time authors, Previous Sales would be zero and predicting power would be limited.

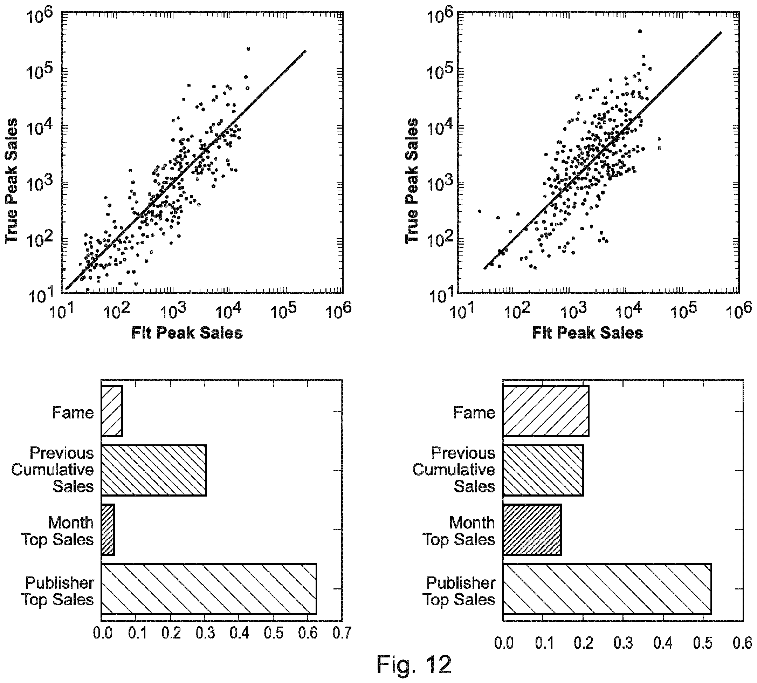

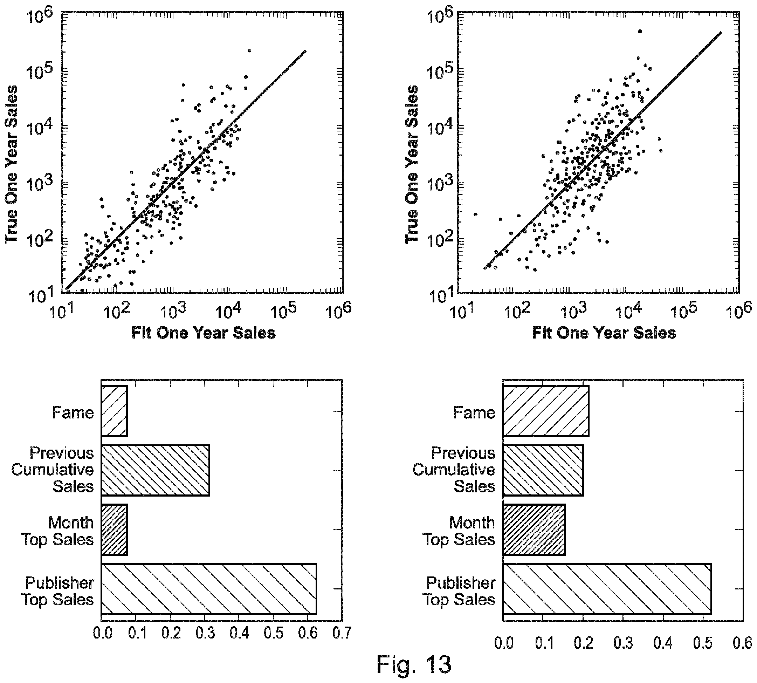

Results for books written by experienced authors: FIG. 12 shows the results of Ridge Regression for predicting peak sales on Mysteries and Biographies and Autobiographies respectively. For both groups, the $R^2$ of the fitting is fairly good; 0.75 for Mystery and 0.53 for Biographies/Autobiographies. Also, for both of them, Imprint Value is the most important feature, having the largest coefficient. However, comparing other coefficients, these two categories behave differently. For mysteries, Previous Sales is the second most important feature followed by Fame and Month Value. For biographies, Fame is the second most important feature followed by Previous Sales and Month Value. Also, the coefficient on Month Value is larger for biographies than for mysteries. Comparing the features, it can be concluded that mysteries are mostly driven by author's publishing history: (1) many mysteries are series books and (2) readers tend to buy books from the authors they have read before. Finally, Mysteries are not time sensitive since the coefficient of the Month Value is very close to 0. For biographies, the fame of the author is more important: readers like to read biographies of famous people. Biographies are more time sensitive, probably because biographies are among many peoples' gift choices during holiday season. The model for one-year sale is shown in FIG. 13. The result for predicting peak sales and the result for one-year sales are similar.

Table II and Table III show the fitting $R^2$ value and the cross-validation score for each genre grouping for peak sales and one-year sales, respectively. Both results are similar and the scores for one-year sales are higher for some groups.

TABLE II: Model Result Table for Peak Sale. Peak sale model fitting $R^2$ and Cross Validation Score for fiction and nonfiction groups.

| | Fiction | | Nonfiction | |
|---|---|---|---|---|
| Group | $R^2$ | CV score | $R^2$ | CV score |
| Group A | 0.69 | 0.66 (+/- 0.21) | 0.53 | 0.50 (+/- 0.15) |

(continued)

| | Fiction | | Nonfiction | |
|---|---|---|---|---|
| Group | $R^2$ | CV score | $R^2$ | CV score |
| Group B | 0.76 | 0.72 (+/- 0.18) | 0.44 | 0.40 (+/- 0.20) |
| Group C | 0.47 | 0.37 (+/- 0.38) | 0.56 | 0.53 (+/- 0.21) |
| Group D | 0.62 | 0.60 (+/- 0.12) | 0.36 | 0.25 (+/- 0.39) |
| Group E | 0.56 | 0.50 (+/- 0.32) | 0.48 | 0.45 (+/- 0.21) |

TABLE III: Model Result Table for One-Year Sale. One-Year Sale model fitting $R^2$ and Cross Validation Score for fiction and nonfiction groups.

| | Fiction | | Nonfiction | |
|---|---|---|---|---|
| Group | $R^2$ | CV score | $R^2$ | CV score |
| Group A | 0.67 | 0.64 (+/- 0.22) | 0.53 | 0.50 (+/- 0.18) |
| Group B | 0.75 | 0.71 (+/- 0.17) | 0.49 | 0.46 (+/- 0.20) |
| Group C | 0.49 | 0.39 (+/- 0.36) | 0.57 | 0.54 (+/- 0.16) |
| Group D | 0.62 | 0.60 (+/- 0.16) | 0.39 | 0.29 (+/- 0.35) |
| Group E | 0.56 | 0.50 (+/- 0.31) | 0.48 | 0.46 (+/- 0.18) |

From the tables, it can be seen that for some groups, there are high cross-validation scores, such as Fiction Group A and Fiction Group B. However, some groups have low cross validation score, such as Fiction Group D. There are multiple reasons for this: (1) some of the groups are very small, which leads to the test sample in cross validation being small, and the $R^2$ for a small dataset may not be accurate; (2) some new editions for old books exist in the dataset, which could influence the performance of the model. In general, the performance for fiction is better than nonfiction, indicating that there may be other features worth using for nonfiction.

B. For the Second Example

Learning to Place was applied to books published in 2015, aiming to predict the one-year sales of each book. Results from Linear Regression are also shown for comparison.

1. Predictions

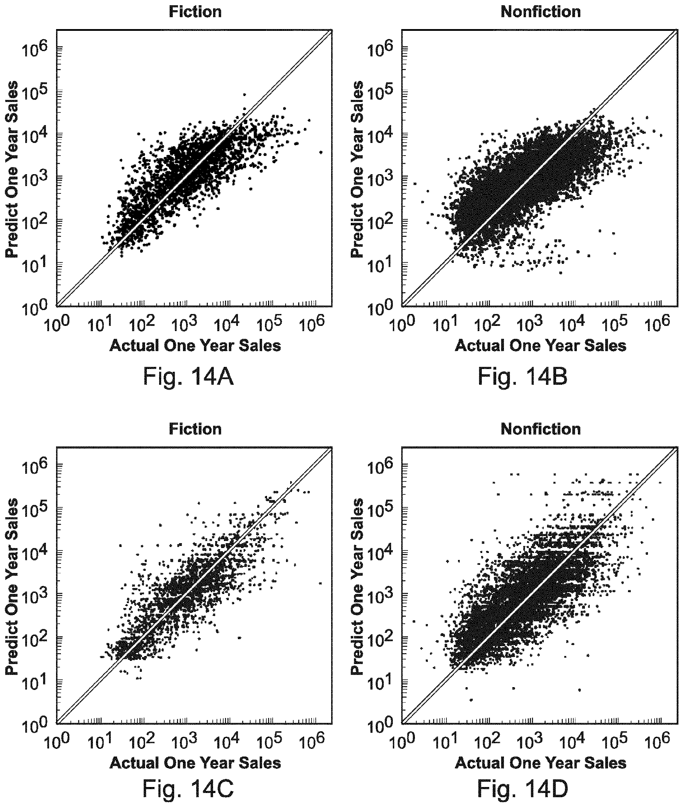

FIGS. 14A-D show scatter plots of actual one-year sales against predicted one-year sales for fiction and nonfiction. FIGS. 14A and 14B show that if Linear Regression is used, on the high end (when true sales exceed approximately 104 copies) the predictions are systematically below the 45-degree reference line, which means that the model systematically under predicts the real sales. However, as shown in FIGS. 14A and 14B, if Learning to Place is used, this underprediction is removed.

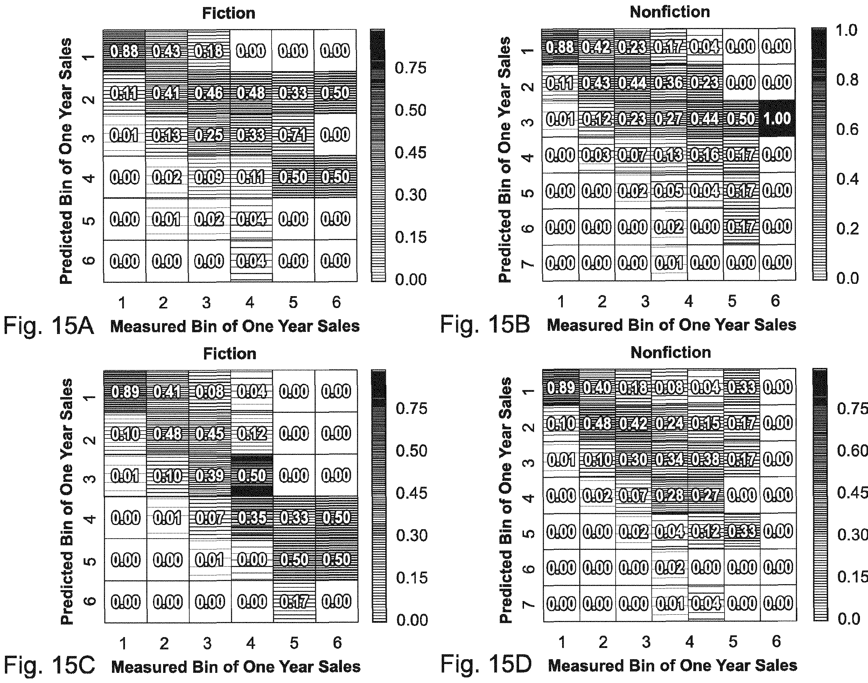

FIGS. 15A-D show the confusion matrices of actual one-year sales bin against the predicted one-year sales bin for fiction and nonfiction using Linear Regression (FIGS. 15A and 15B) and Learning to Place (FIGS. 15C and 15D). In order to make the pattern more visible, the confusion matrices are normalized based on each column. If the prediction is satisfying, higher densities on the diagonal line are expected. As shown in FIGS. 15A and 15B, which correspond to Linear Regression, for bins higher than 2, the higher-density cell is lower than the diagonal line, indicating underprediction. In FIGS. 15C and 15D, capturing Learning to Place, it is shown that the diagonal higher density preserves until bin 4, while the underpredictions are limited to bin 6 for fiction and bins 6 and 7 for nonfiction.

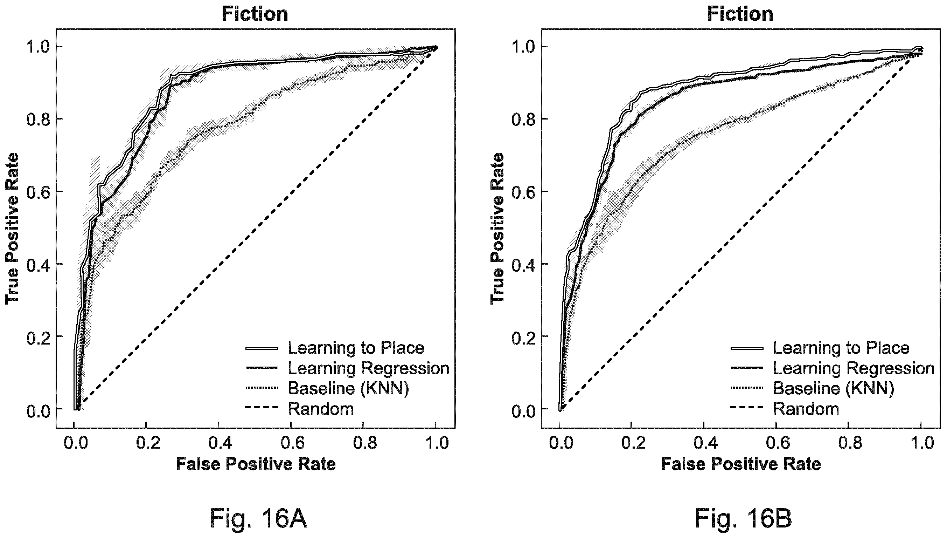

FIGS. 16A and 16B shows the ROC curve for fiction and nonfiction, comparing Learning to Place, Linear Regression, K-nearest neighbor baseline and Random. The curves for Learning to Place are almost always above the curves for other methods, indicating that Learning to Place outperforms other algorithms.

Finally, Table IV shows the $R^2$, AUC score, and High-end RMSE for fiction and nonfiction, comparing K-nearest neighbor baseline, Linear Regression and Learning to Place. It confirms that for both fiction and nonfiction, Learning to Place always offers higher $R^2$ and AUC scores, and lower high-end RMSE, indicating that it outperforms the other

methods.

TABLE IV: Model Result Table for One-Year Sale. One-Year Sale model fitting $R^2$ and Cross Validation Score for fiction and nonfiction groups.

| Category | Fiction | | |
|---|---|---|---|
| Method | $R^2$ | AUC score | High-end RMSE |
| Baseline | -0.28 (+/- 0.33) | 0.78 (+/- 0.05) | (3.67 +/- 2.67) x $10^9$ |
| Linear Regression | 0.62 (+/- 0.11) | 0.87 (+/- 0.02) | (8.05 +/- 17.3) x $10^9$ |
| Learning to Place | 0.69 (+/- 0.07) | 0.88 (+/- 0.03) | (5.94 +/- 16) x $10^9$ |

| Category | Nonfiction | | |
|---|---|---|---|
| Method | $R^2$ | AUC score | High-end RMSE |
| Baseline | -0.47 (+/- 0.43) | 0.75 (+/- 0.04) | (2.00 +/- 2.14) x $10^9$ |
| Linear Regression | 0.51 (+/- 0.07) | 0.84 (+/- 0.02) | (2.36 +/- 2.26) x $10^9$ |
| Learning to Place | 0.59 (+/- 0.06) | 0.88 (+/- 0.01) | (3.55 +/- 2.73) x $10^9$ |

2. Feature Importance

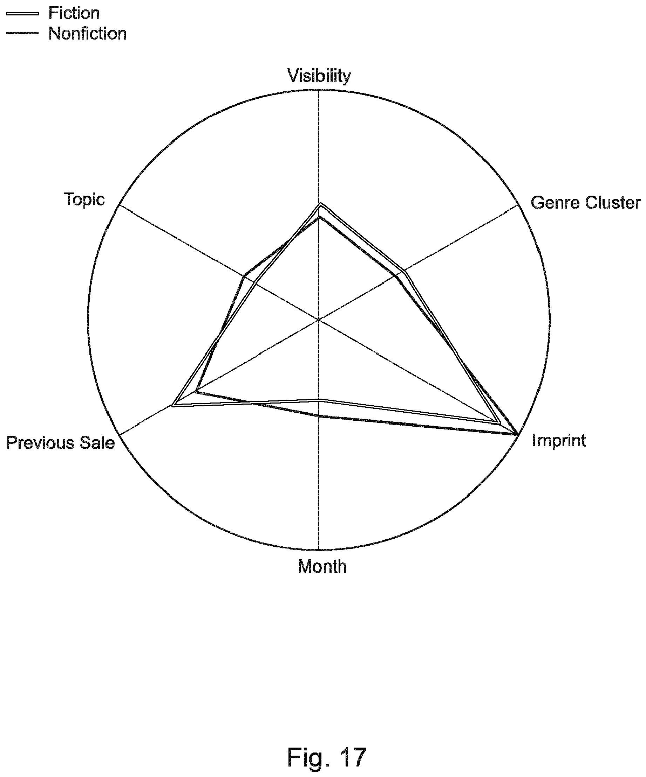

Feature Importance for Fiction and Nonfiction: To find out which feature group is important, the normalized accuracy score was plotted using each feature group for fiction and nonfiction, shown in FIG. 17. For both fiction and nonfiction, imprint is the most important feature group. However, fiction relies more on previous sale and visibility than nonfiction, while nonfiction relies more on imprint.

Feature Importance for Different Genres: Learning to Place was applied on selected genres and the feature importance difference between different genres was examined. The five largest genres under fiction (Mystery, Thriller, Fantasy, Historical, Literacy) and nonfiction (Biography, Business, Cooking, History, Religion) were selected, and the feature importance score vector for each genre was obtained.

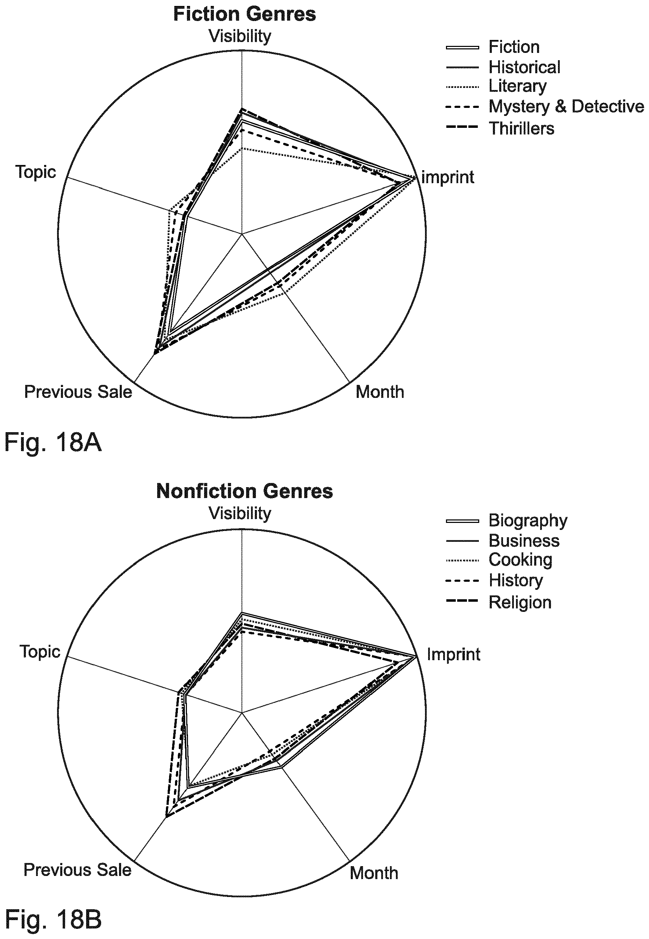

FIGS. 18A and 18B shows normalized accuracy score using each feature group for each genre. In general, across all genres, Importance(Imprint) > Importance(Previous Sales) z Importance(Visibility) > Importance(Others). There are, however, differences between genres. For fiction genres, for Thrillers and Mystery & Detective, the author's visibility is much more important than Literary. Thrillers and Mystery & Detective also has higher importance in previous sales than other genres, possibly due to the fact that serial books are common in these two genres. For nonfiction genres, Biography relies more on visibility than previous sales, while History is the exact opposite. Religion is the only genre that relies less on Imprint, but it relies more on Previous Sales.

Since there are features in three main categories: author, book and publisher, the importance for each of these categories can be examined. To achieve this, three models can be trained, each including only one feature category. Sales of each book can be predicted using each of these three models separately, the absolute error $E_{author}$, $E_{book}$, $E_{publisher}$ obtained, compared to the true sales of the book, and the three errors normalized so that they sum to one. A ternary plot can be used to inspect where the errors are coming from for different books.

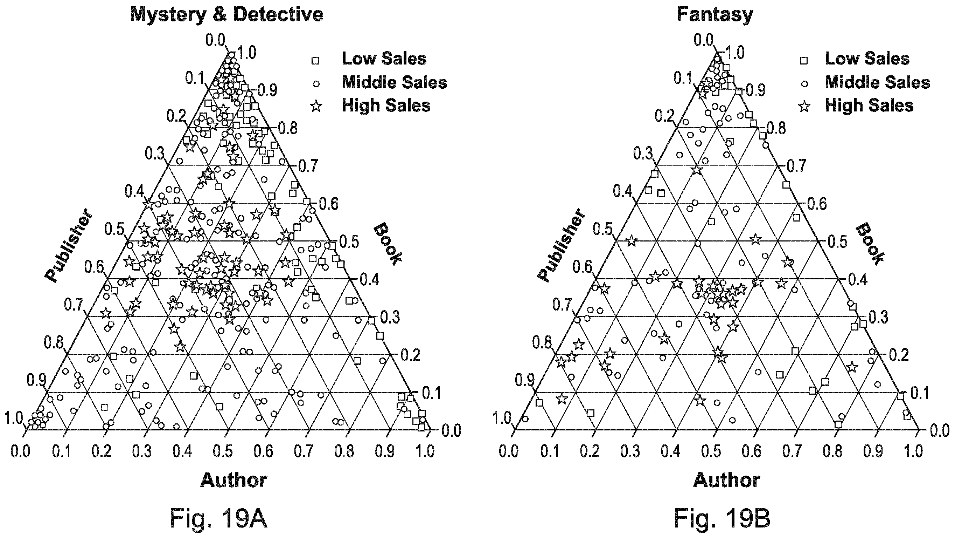

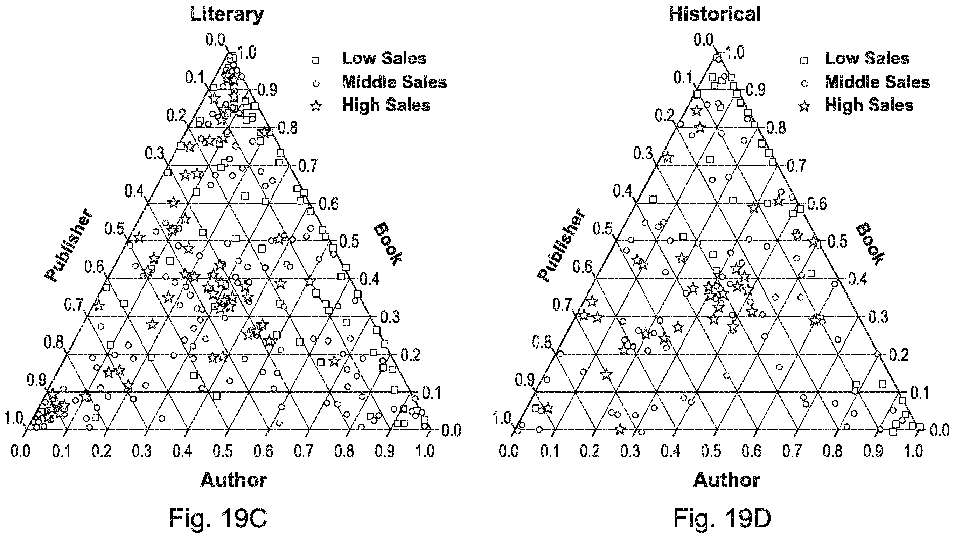

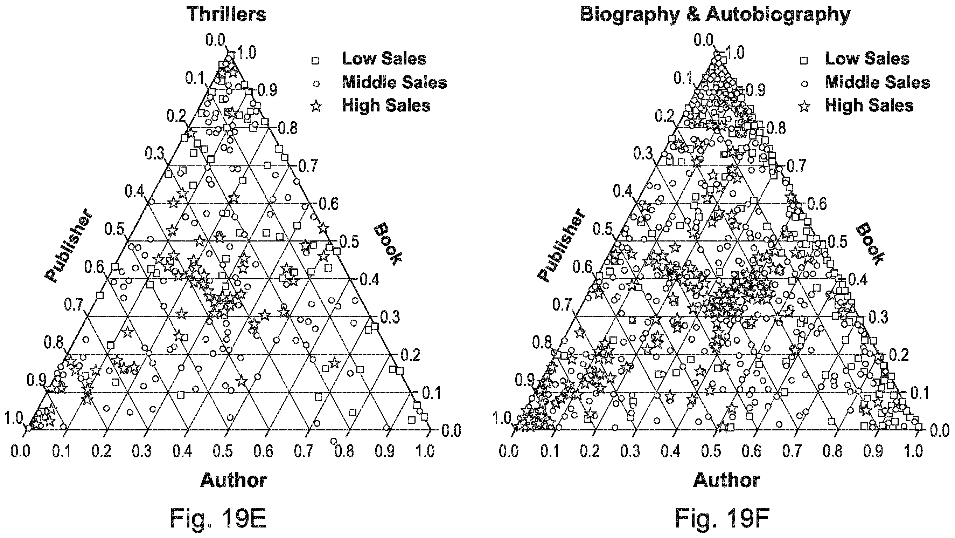

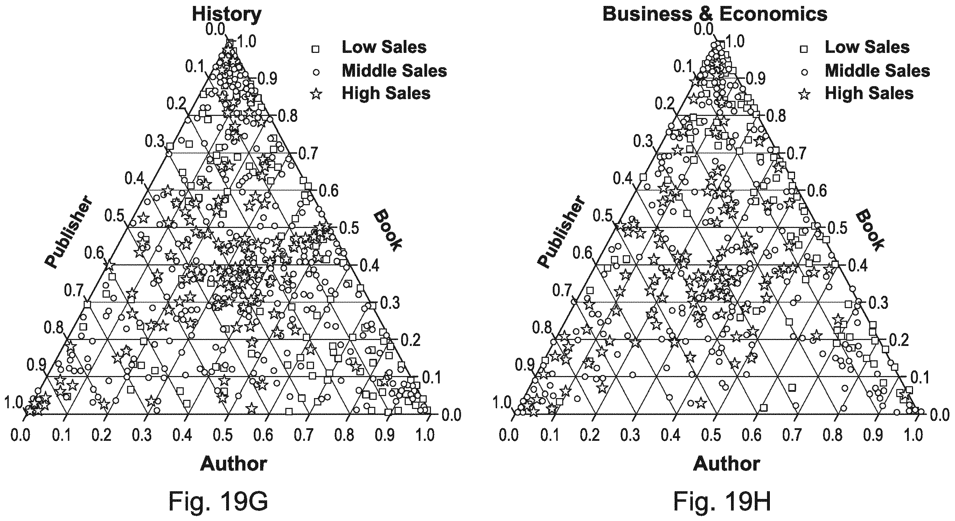

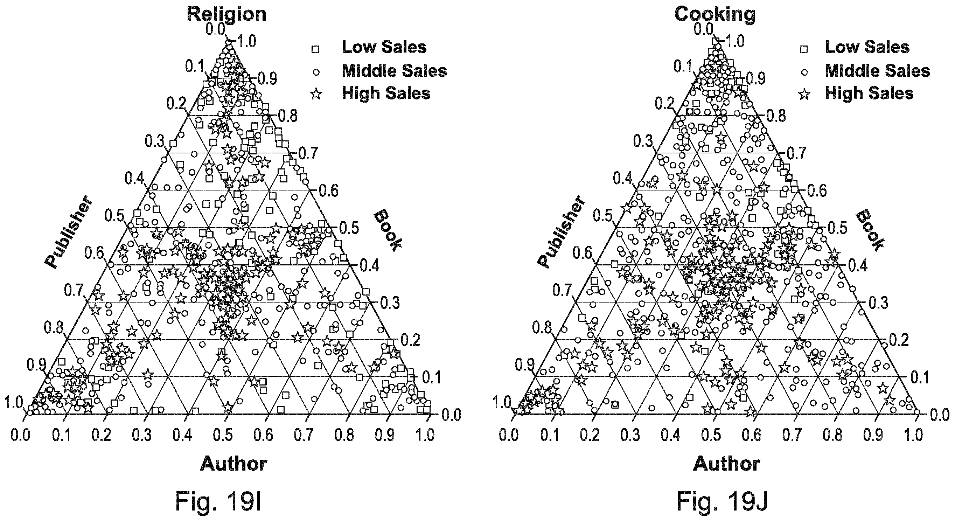

FIG. 19 shows ternary plots for books in different genres in fiction and nonfiction. For all genres, the top corner has the highest density, meaning that if one relies only on the book feature category, the largest prediction error is obtained, showing that imprint and author features are very important for sales prediction. The left corner has the second highest density for most genres, meaning that for many the books, having only publisher information is not sufficient to obtain a good prediction. The middle of the triangle has the third highest density, which is seen more clearly in nonfiction genres. Most books in the middle area are high-selling books, which means for high-selling books, the importance of these three feature categories are balanced.

Example Digital Processing Environment

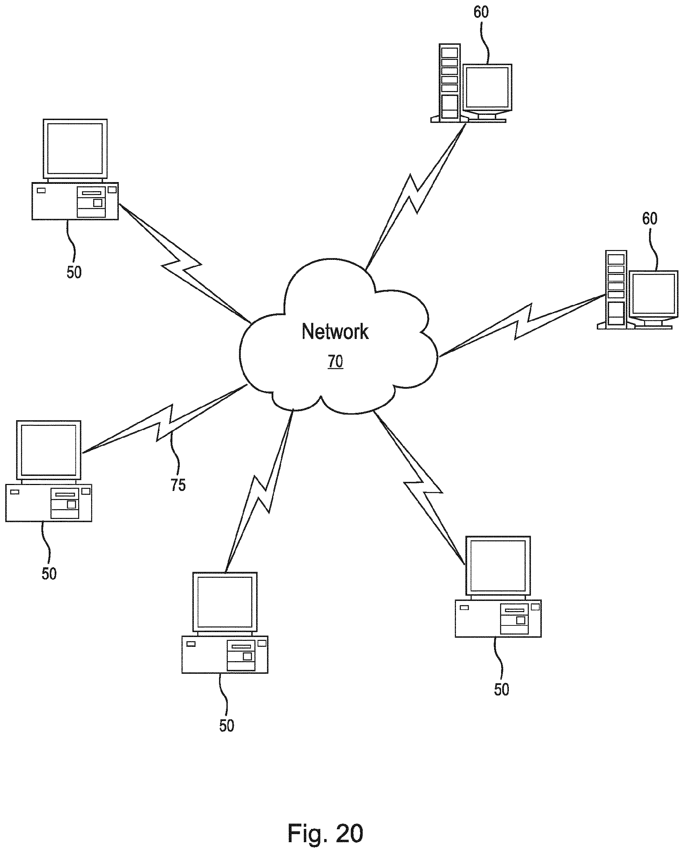

FIG. 20 illustrates a computer network or similar digital processing environment in which the present embodiments may be implemented. Client computer(s)/devices 50 and server computer(s) 60 provide processing, storage, and input/output devices executing application programs and the like. Client computer(s)/devices 50 can also be linked through communications network 70 to other computing devices, including other client devices/processes 50 and server computer(s) 60. Communications network 70 can be part of a remote access network, a global network (*e.g.,* the Internet), cloud computing servers or service, a worldwide collection of computers, Local area or Wide area networks, and gateways that currently use respective protocols (TCP/IP, Bluetooth, *etc.*) to communicate with one another. Other electronic device/computer network architectures are suitable. In the context of such a network, a subscription-based service can be implemented on a server, for example, where the connected devices can provide to the service data used by the example systems and methods disclosed herein to predict future performance of products (*e.g.,* book sales).

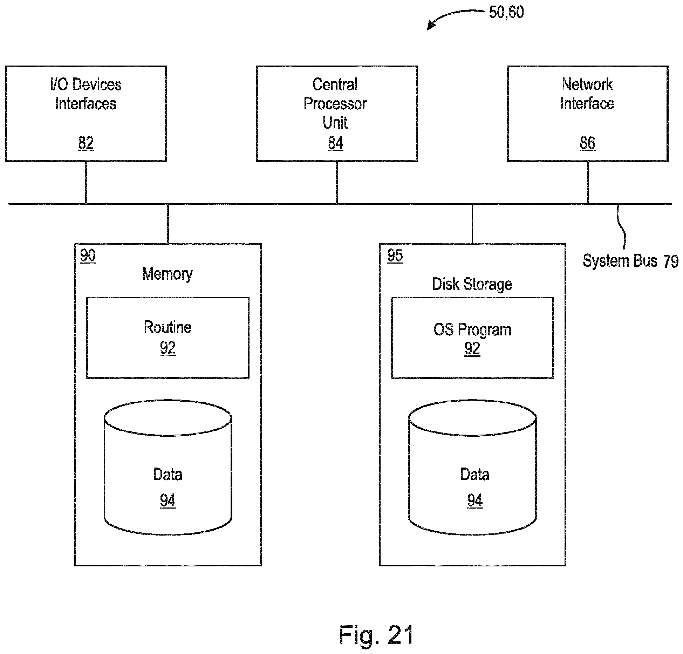

FIG. 21 is a diagram of the internal structure of a computer (*e.g.,* client processor/device 50 or server computers 60) in the computer system of FIG. 20. Each computer 50, 60 contains system bus 79, where a bus is a set of hardware lines used for data transfer among the components of a computer or processing system. Bus 79 is essentially a shared conduit that connects different elements of a computer system (*e.g.,* processor, disk storage, memory, input/output ports, and network ports) that enables the transfer of information between the elements. Attached to system bus 79 is I/O device interface 82 for connecting various input and output devices (*e.g.,* keyboard, mouse, displays, printers, and speakers) to the computer 50, 60. Network interface 86 allows the computer to connect to various other devices attached to a network (*e.g.,* network 70 of FIG. 20). Memory 90 provides volatile storage for computer software instructions 92 and data 94 used to implement many embodiments (*e.g.,* systems 400 and 500 and methods 600 and 700). Disk storage 95 provides non-volatile storage for computer software instructions 92 and data 94 used to implement many embodiments. Central processor unit 84 is also attached to system bus 79 and provides for the execution of computer instructions.

In the context of FIG. 21, the computer 50, 60 can include a system for machine learning classification. Components of the system include an interface 82, a datastore 90, 95, and a processor 84. The interface 82 can be configured to present information to a user of the system and to accept input from the user. The datastore 90, 95 can store a data structure representing relationships between comparative intrinsic characteristics and extrinsic characteristics of products. The processor 84 can be configured to determine representations of comparative intrinsic characteristics of products based on representations of characteristics of the products, determine representations of corresponding comparative extrinsic characteristics of the products, generate a data structure representing relationships between the comparative intrinsic characteristics and the comparative extrinsic characteristics, and train a machine learning classifier with the data structure to return representations of comparative extrinsic characteristics in response to comparative intrinsic characteristic.

In one embodiment, the processor routines 92 and data 94 are a computer program product (generally referenced 92), including a computer readable medium (*e.g.,* a removable storage medium such as one or more DVD-ROM's, CD-ROM's, diskettes, and tapes) that provides at least a portion of the software instructions for the system. Computer program product 92 can be installed by any suitable software installation procedure, as is well known in the art. In another embodiment, at least a portion of the software instructions may also be downloaded over a cable, communication and/or wireless connection. In other embodiments, the programs are a computer program propagated signal product 75 (FIG. 20) embodied on a propagated signal on a propagation medium (*e.g.,* a radio wave, an infrared wave, a laser wave, a sound wave, or an electrical wave propagated over a global network such as the Internet, or other network(s)). Such carrier medium or signals provide at least a portion of the software instructions for the routines/program 92.

In alternative embodiments, the propagated signal can be an analog carrier wave or digital signal carried on the propagated medium. For example, the propagated signal may be a digitized signal propagated over a global network (*e.g.,* the Internet), a telecommunications network, or other network. In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of computer program product 92 is a propagation medium that the computer system 50 may receive and read, such as by receiving the propagation medium and identifying a propagated signal embodied in the propagation medium, as described above for computer program propagated signal product. Generally speaking, the term "carrier medium" or transient carrier encompasses the foregoing transient signals, propagated signals, propagated medium, storage medium and the like. In other embodiments, the program product 92 may be implemented as Software as a Service (SaaS), or other installation or communication supporting end-users.

While example embodiments have been particularly shown and described, it will be understood by those skilled in the art that various changes in form and details may be made therein without departing from the scope of the embodiments encompassed by the appended claims.

**Claims**

1. A system for machine learning classification, the system comprising:

representations of characteristics of products;
a pre-processor configured to:

determine (i) representations of comparative intrinsic characteristics of the products based on the representations of characteristics of products, and (ii) representations of corresponding comparative extrinsic characteristics of the products; and
generate a data structure representing relationships between the comparative intrinsic characteristics and the comparative extrinsic characteristics; and
a machine learning classifier trained with the data structure, the classifier configured to return representations of comparative extrinsic characteristics in response to given comparative intrinsic characteristics.

2. A system as in claim 1 wherein the pre-processor is configured to filter the representations of characteristics of products before determining the representations of comparative intrinsic characteristics of the products and generating the data structure.

3. A system as in claim 1 wherein the products are books, and wherein the comparative intrinsic characteristics of the products are differences between a type of characteristic between two books.

4. A system as in claim 3 wherein the intrinsic characteristics of the products are any of fame of an author of the book, previous cumulative sales for the author, genre and topic of the book, publisher value for the book, and seasonal fluctuations.

5. A method of machine learning classification, the method comprising:

determining representations of comparative intrinsic characteristics of products based on representations of characteristics of the products;
determining representations of corresponding comparative extrinsic characteristics of the products;
generating a data structure representing relationships between the comparative intrinsic characteristics and the comparative extrinsic characteristics; and
training a machine learning classifier with the data structure to return representations of comparative extrinsic characteristics in response to given comparative intrinsic characteristics.

6. A method as in claim 5 further comprising filtering the representations of intrinsic characteristics of products before determining the representations of comparative intrinsic characteristics of the products and generating the data structure.

7. A method as in claim 5 wherein the products are books, and wherein the comparative intrinsic characteristics of the products are differences between a type of characteristic between two books.

8. A method as in claim 7 wherein the intrinsic characteristics of the products are any of fame of an author of the book, previous cumulative sales for the author, genre and topic of the book, publisher value for the book, and seasonal fluctuations.

9. A system for machine learning classification, the system comprising:

a machine learning classifier trained with data representing relationships between intrinsic characteristics of products and extrinsic characteristics of the products, the classifier configured to return a plurality of representations of comparative extrinsic characteristics for a given product in response to a plurality of comparative intrinsic characteristics between the given product and a plurality of other products; and
a disambiguator configured to, based on the plurality of representations of comparative extrinsic characteristics for the given product, rank a plurality of intervals between the extrinsic characteristics for the plurality of other products and determine an extrinsic characteristic for the given product based on the ranking.

10. A system as in claim 9 wherein the disambiguator is configured to rank the plurality of intervals based on a tally of the intervals, an interval being tallied when it is in a range of a given comparative extrinsic characteristic for the given product when compared to a given other product.

11. A system as in claim 9 wherein the given product is an unpublished book and the other products are published books.

12. A system as in claim 11 the determined extrinsic characteristic for the given product is a peak sales value.

13. A method of machine learning classification, the method comprising:

   inputting, to a machine learning classifier trained with data representing relationships between intrinsic characteristics of products and extrinsic characteristics of the products, a plurality of representations of comparative intrinsic characteristics between a given product and a plurality of other products to obtain a plurality of representations of comparative extrinsic characteristics for the given product;
   ranking a plurality of intervals between the extrinsic characteristics for the plurality of other products based on the plurality of representations of comparative extrinsic characteristics for the given product; and
   determining an extrinsic characteristic for the given product based on the ranking.

14. A method as in claim 13 wherein ranking the plurality of intervals includes tallying the intervals, an interval being tallied when it is in a range of a given comparative extrinsic characteristic for the given product when compared to a given other product.

15. A method as in claim 13 wherein the given product is an unpublished book, the other products are published books, and the determined extrinsic characteristic for the given product is a peak sales value or cumulative sales value.

Distribution of One Year Sale
(Hardcovers published in 2008-2015)

Fig. 1

Fig. 2A

*The Appeal* by John Grisham

Fig. 2B

*The Appeal* by John Grisham

Fig. 3

400

415

405a — Comparative Intrinsic Characteristic | Comparative Intrinsic Characteristic — 410a

405b — Comparative Intrinsic Characteristic | Comparative Intrinsic Characteristic — 410c

405c — Comparative Intrinsic Characteristic | Comparative Intrinsic Characteristic — 410d

405d — Comparative Intrinsic Characteristic | Comparative Intrinsic Characteristic — 410d

⋮ ⋮

405n — Comparative Intrinsic Characteristic | Comparative Intrinsic Characteristic — 410n

Classifier

420

Fig. 4

Fig. 5A

**Training Phase**

| Book 1 Features | Book 2 Features | ⇨ | Concatenate Features (Book 1 and 2) |

**Features** | **Label (based on one year sales)**

| Concatenate Features (Book 1 and 2) | Greater |
| Concatenate Features (Book 1 and 3) | Smaller |
| Concatenate Features (Book 2 and 3) | Smaller |

⇨ Random Forest Classifier

**Testing Phase**

Book 4 Features ⇨

**Features**

| Concatenate Features (Book 4 and 1) |
| Concatenate Features (Book 4 and 2) |
| Concatenate Features (Book 4 and 3) |

⇨ Random Forest Classifier ⇨

**Label (based on one year sales)**

| Greater |
| Smaller |
| Smaller |

**Voting Distribution**

Book 2 Sale    Book 1 Sale    **Predicted Book 4's Place**    Book 3 Sale

## Fig. 5B

EP 3 418 916 A1

600

605 — Determine representations of comparative intrinsic characteristics of products based on representations of characteristics of products

610 — Determine representations of comparative extrinsic characteristics of the products corresponding to the comparative intrinsic characteristics

615 — Generate a data structure representing relationships between the comparative intrinsic characteristics and the comparative extrinsic characteristics

620 — Train a machine learning classifier with the data structure to return representations of comparative extrinsic characteristics in response to given comparative intrinsic characteristics

Fig. 6

700

705 — Input, to machine learning classifier trained with data representing relationships between intrinsic characteristics of products and extrinsic characteristics of the products, a plurality of representations of comparative intrinsic characteristics between a given product and a plurality of other products to obtain a plurality of representations of comparative extrinsic characteristics for the given product

710 — Rank a plurality of intervals between the extrinsic characteristics for the plurality of other products based on the plurality of representations of comparative extrinsic characteristics for the given product

715 — Determine an extrinsic characteristic for the given product based on the ranking

## Fig. 7

**One Year Sales**

Fig. 8A

Fig. 8B

## Fiction

## Nonfiction

Fig. 9

**FICTION**

**Nonfiction**

Fig. 10

Fig. 11A    First One Year Sales

Fig. 11B

Fig. 12

Fig. 13

**Fiction**

Fig. 14A

**Nonfiction**

Fig. 14B

**Fiction**

Fig. 14C

**Nonfiction**

Fig. 14D

**Fiction**

| Predicted Bin of One Year Sales \ Measured Bin | 1 | 2 | 3 | 4 | 5 | 6 |
|---|---|---|---|---|---|---|
| 1 | 0.88 | 0.43 | 0.18 | 0.00 | 0.00 | 0.00 |
| 2 | 0.11 | 0.41 | 0.46 | 0.48 | 0.33 | 0.50 |
| 3 | 0.01 | 0.13 | 0.25 | 0.33 | 0.71 | 0.00 |
| 4 | 0.00 | 0.02 | 0.09 | 0.11 | 0.50 | 0.50 |
| 5 | 0.00 | 0.01 | 0.02 | 0.04 | 0.00 | 0.00 |
| 6 | 0.00 | 0.00 | 0.00 | 0.04 | 0.00 | 0.00 |

Fig. 15A    Measured Bin of One Year Sales

**Nonfiction**

| Predicted Bin of One Year Sales \ Measured Bin | 1 | 2 | 3 | 4 | 5 | 6 | 7 |
|---|---|---|---|---|---|---|---|
| 1 | 0.88 | 0.42 | 0.23 | 0.17 | 0.04 | 0.00 | 0.00 |
| 2 | 0.11 | 0.43 | 0.44 | 0.36 | 0.23 | 0.00 | 0.00 |
| 3 | 0.01 | 0.12 | 0.23 | 0.27 | 0.44 | 0.50 | 1.00 |
| 4 | 0.00 | 0.03 | 0.07 | 0.13 | 0.16 | 0.17 | 0.00 |
| 5 | 0.00 | 0.00 | 0.02 | 0.05 | 0.04 | 0.17 | 0.00 |
| 6 | 0.00 | 0.00 | 0.00 | 0.02 | 0.00 | 0.17 | 0.00 |
| 7 | 0.00 | 0.00 | 0.00 | 0.01 | 0.00 | 0.00 | 0.00 |

Fig. 15B    Measured Bin of One Year Sales

**Fiction**

| Predicted Bin of One Year Sales \ Measured Bin | 1 | 2 | 3 | 4 | 5 | 6 |
|---|---|---|---|---|---|---|
| 1 | 0.89 | 0.41 | 0.08 | 0.04 | 0.00 | 0.00 |
| 2 | 0.10 | 0.48 | 0.45 | 0.12 | 0.00 | 0.00 |
| 3 | 0.01 | 0.10 | 0.39 | 0.50 | 0.00 | 0.00 |
| 4 | 0.00 | 0.01 | 0.07 | 0.35 | 0.33 | 0.50 |
| 5 | 0.00 | 0.00 | 0.01 | 0.00 | 0.50 | 0.50 |
| 6 | 0.00 | 0.00 | 0.00 | 0.00 | 0.17 | 0.00 |

Fig. 15C    Measured Bin of One Year Sales

**Nonfiction**

| Predicted Bin of One Year Sales \ Measured Bin | 1 | 2 | 3 | 4 | 5 | 6 | 7 |
|---|---|---|---|---|---|---|---|
| 1 | 0.89 | 0.40 | 0.18 | 0.08 | 0.04 | 0.33 | 0.00 |
| 2 | 0.10 | 0.48 | 0.42 | 0.24 | 0.15 | 0.17 | 0.00 |
| 3 | 0.01 | 0.10 | 0.30 | 0.34 | 0.38 | 0.17 | 0.00 |
| 4 | 0.00 | 0.02 | 0.07 | 0.28 | 0.27 | 0.00 | 0.00 |
| 5 | 0.00 | 0.00 | 0.02 | 0.04 | 0.12 | 0.33 | 0.00 |
| 6 | 0.00 | 0.00 | 0.00 | 0.02 | 0.00 | 0.00 | 0.00 |
| 7 | 0.00 | 0.00 | 0.00 | 0.01 | 0.04 | 0.00 | 0.00 |

Fig. 15D    Measured Bin of One Year Sales

Fig. 16B

Fig. 16A

Fig. 17

**Fiction Genres**

Fig. 18A

**Nonfiction Genres**

Fig. 18B

Fig. 19A

Fig. 19B

Fig. 19C

Fig. 19D

Fig. 19E

Fig. 19F

EP 3 418 916 A1

Fig. 19H

Fig. 19G

Low Sales
Middle Sales
High Sales

Cooking

Book

Publisher

Author

Fig. 19J

Religion

Book

Publisher

Author

Fig. 19I

Fig. 20

50,60

| I/O Devices<br>Interfaces<br><u>82</u> | | Central<br>Processor<br>Unit<br><u>84</u> | | Network<br>Interface<br><u>86</u> |

System Bus 79

<u>90</u>
Memory

Routine
<u>92</u>

Data
<u>94</u>

<u>95</u>
Disk Storage

OS Program
<u>92</u>

Data
<u>94</u>

Fig. 21

| Europäisches Patentamt European Patent Office Office européen des brevets | **EUROPEAN SEARCH REPORT** | Application Number EP 18 17 8647 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 712 937 B1 (BACUS MICHAEL PATRICK [US] ET AL) 29 April 2014 (2014-04-29) * column 2, line 20 - column 9, line 22 * * column 11, line 21 - line 35 * ----- | 1-15 | INV. G06F17/30 G06Q10/04 G06Q30/02 |
| A | US 2016/239746 A1 (YU HONG [US]) 18 August 2016 (2016-08-18) * paragraph [0020] - paragraph [0037] * * paragraph [0069] - paragraph [0091] * ----- | 1-15 | |
| A | Wenjie Huang ET AL: "A Novel Trigger Model for Sales Prediction with Data Mining Techniques", Data Science Journal. 14, 22 May 2015 (2015-05-22), XP055514235, Retrieved from the Internet: URL:https://datascience.codata.org/articles/10.5334/dsj-2015-015/print/ [retrieved on 2018-10-10] * the whole document * ----- | 1-15 | |
| | | | TECHNICAL FIELDS SEARCHED (IPC) G06F G06Q |

The present search report has been drawn up for all claims

| Place of search | Date of completion of the search | Examiner |
|---|---|---|
| The Hague | 10 October 2018 | Chinzer, Azzurra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 8647

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2018

| Patent document cited in search report | | Publication date | Patent family member(s) | | Publication date |
|---|---|---|---|---|---|
| US 8712937 | B1 | 29-04-2014 | NONE | | |
| US 2016239746 | A1 | 18-08-2016 | US | 2016239746 A1 | 18-08-2016 |
| | | | WO | 2015084968 A1 | 11-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62522325 A
- US 62685612 A